# EUROPÄISCHE PATENTSCHRIFT

(11) **EP 2 653 079 B1**
(45) Veröffentlichungstag und Bekanntmachung des Hinweises auf die Patenterteilung: **14.09.2016**
(21) Anmeldenummer: 13002007.6
(22) Anmeldetag: 17.04.2013
(51) Int. Cl.: A47J 31/00

(54) **Bereitstellungsvorrichtung für Milchschaum-Kaffee sowie Milchschaum**
Preparation device for milk foam coffee and milk foam
Dispositif de préparation de café à la mousse de lait et mousse de lait

(30) Priorität: 17.04.2012 DE 102012007517
(43) Veröffentlichungstag der Anmeldung: 23.10.2013
(73) Patentinhaber: Coffee in Motion AG, 8853 Lachen am See (CH)
(72) Erfinder: Stingelin, Werner, 8854 Galgenen (CH)
(74) Vertreter: Liebl, Thomas

(56) Entgegenhaltungen:
- EP-B1- 1 674 006
- WO-A1-92/06617
- WO-A2-03/070571
- US-A- 5 241 898
- US-A- 5 858 437

## Beschreibung

Die Erfindung betrifft eine Milchschaum-Kaffee-Bereitstellungsvorrichtung nach dem Oberbegriff des Anspruchs 1. Weiter betrifft die Erfindung eine Milchschaum-Bereitstellungsvorrichtung nach dem Oberbegriff des Anspruchs 15.

In Cafés, Restaurants oder Bars werden regelmäßig eine Vielzahl von Kaffee-Spezialitäten angeboten, wie beispielsweise Espresso, Espresso-Macchiato, Caffe Latte Macchiato, Cappuccino, um nur einige Kaffee-Spezialitäten zu nennen. Die Herstellung derartiger Kaffees erfolgt in allgemein bekannter Weise mittels stationär und ortsfest installierter Kaffeemaschinen, die einen elektrisch aufheizbaren Heißwasser-Drucktank aufweisen, aus dem einerseits heißes Wasser durch ein mit Kaffeepulver gefülltes Sieb zur Herstellung des gewünschten Kaffees geleitet werden kann. Zudem kann aus dem Heißwasser-Drucktank Wasserdampf über eine ventilgesteuerte Schäumdüse zum Aufschäumen von Milch entnommen werden. Dazu wird regelmäßig in ein Gefäß kalte Milch geschüttet und der heiße Wasserdampf durch die Milch geleitet, wodurch sich ein relativ stabiler Milchschaum ausbildet. Zur Bereitung eines Milchschaum-Kaffee-Getränks wird dann entweder heißer Kaffee in eine Trinktasse gegeben und anschließend Milchschaum darauf gegeben oder Milchschaum wird vorab in der Trinktasse mittels der Dampfdüse erzeugt und anschließend Kaffee eingefüllt, wobei der Milchschaum auf dem Kaffee aufschwimmt. Neben dem professionellen Einsatz derartiger Kaffeemaschinen in Cafes, Bars und Restaurants werden derartige Maschinen, als Kleingeräte auch im privaten Bereich benutzt.
All diesen Kaffeemaschinen ist gemeinsam, dass sie einen Heißwasser-Drucktank benötigen, in dem unter Zufuhr hoher elektrischer Energie Heißwasser und über die Schäumdüse Wasserdampf erzeugt wird. Diese hohe Energie wird aus dem Stromnetz entnommen, so dass eine ständige Elektrokabelverbindung erforderlich ist.

Insbesondere bei Großveranstaltungen mit vielen Teilnehmern, wie beispielsweise Tagungen, Kongressen, Messen, Oper- und Theaterveranstaltungen etc. besteht oftmals das Bedürfnis nach einem hochwertigen Milchschaum-Kaffee-Getränk, das an den genannten Veranstaltungsorten aber üblicherweise nur an ortsfesten restaurantähnlichen bzw. cafeähnlichen Servicepoints angeboten wird, so dass sich Gäste, Besucher bzw. Kunden dorthin begeben müssen, um sich das gewünschte Milchschaum-Kaffee-Getränk dort frisch zubereiten zu lassen. Insbesondere in Verbindung mit relativ kurzen Pausenzeiten und einer Vielzahl von Konsumenten kann dieser Wunsch aufgrund der relativ langen Zubereitungszeit derartiger Milchschaum-Kaffee-Getränke regelmäßig logistisch nicht bewerkstelligt werden, so dass viele Anbieter derartiger Milchschaum-Kaffee-Getränke dazu übergehen, insbesondere bei relativ kurzen Pausenzeiten, diese Kaffee-Spezialitäten gar nicht erst anzubieten. Darüber hinaus erfordert zum Beispiel auf Messen die Versorgung von Standbesuchern bzw. Kunden mit derartigen Kaffee-Spezialitäten einen enorm hohen Investitionsaufwand, der von vielen Firmen als unverhältnismäßig angesehen wird, so dass standseitig oftmals nur wenig qualitativ hochwertige Kaffee-Produkte angeboten werden. Zudem sind viele Messestände platzmäßig so ausgebildet, dass dort eine professionelle Kaffeemaschine nicht untergebracht werden kann. Es besteht daher seit längerer Zeit das Bedürfnis nach Milchschaum-Kaffee-Getränkebereitern, mit denen ein mobiler Ausschank von hochwertigen Milchschaum-Kaffee-Getränken möglich ist.

Ein derartiger gattungsgemäßer Milchschaum-Kaffee-Getränkebereiter ist aus der EP 1 674 006 B1 bekannt, die einen Milchschaum-Kaffee-Getränkebereiter offenbart, der unabhängig und mobil von einer bereiterextemen Energiezuführung ausgeführt ist, wobei der Milchschaum-Kaffee-Getränkebereiter eine Aufnahmehalterung für zwei wechselbare und nachfüllbare Flüssigkeitsbehälter als Kaffeebehälter und Milchbehälter aufweist, die thermisch gedämmt voneinander getrennt angeordnet sind und in der Betriebsstellung jeweils mit einer unteren Ausströmöffnung an ein zugeordnetes Behälteranschlussventil der Aufnahmehalterung gekoppelt sind. Die Behälteranschlussventile sind durch Leitungen mit zugeordneten manuell betätigbaren Zapfventilen mit Zapföffnungen verbunden. Gemäß einer ersten Variante sind im Milchbehälter von einer bereiterextemen Energiezuführung unabhängige Milch-Aufschäummittel zugeordnet, in den aus einer daran wechselbar angeschlossenen Druckpatrone Distickstoffmonoxid (N₂O) als Schäum- und Treibmittel eingeführt wird, wodurch bei einer Betätigung des zugeordneten Zapfventils Milchschaum zur Bereitung eines Milchschaum-Kaffee-Getränks austritt.

Ein derartiger Milchschaum-Kaffee-Getränkebereiter soll entweder in der Art eines Rucksacks mit Traggurten ausgebildet sein oder oben auf einem Fahrgestell befestigt sein. Eine derartige Vorrichtung ermöglicht somit zwar die mobile Versorgung von Kunden mit Milchschaum-Kaffee-Getränken, weist jedoch nach wie vor eine Reihe von Nachteilen auf: So zum Beispiel den Nachteil, dass die Kaffeebehälter regelmäßig mit von unterschiedlichen Personen auf unterschiedliche Weise bereitetem Kaffee befüllt werden, was sich in einer schwankenden Kaffeequalität niederschlägt. Insbesondere in Verbindung mit Systemanbietern ist jedoch ein einheitlicher Kaffeegeschmack und eine dauerhaft hochwertige Kaffeequalität unabdingbar. Des Weiteren ergibt sich bei derartigen Milchschaum-Kaffee-Getränkebereitern das Problem, dass der Kaffee, insbesondere bei niedrigen Füllständen, bei einer Betätigung des Kaffee-Zapfventils nur noch tröpfchenweise bzw. als Rinnsal bzw. gegebenenfalls sogar überhaupt nicht mehr abzapfbar ist. Das gleiche Problem stellt sich auch mit den optional zum Kaffeebehälter zusätzlich vorgesehenen Heißmilchbehältern, die die gleiche Anschluss- und Zapftechnik wie die Kaffeebehälter aufweisen.

Zusammenfassend gesehen hat sich somit im praktischen Betrieb der Einsatz derartiger mobiler Milchschaum-Kaffee-Getränkebereiter nicht bewährt, wobei insbesondere auch der Außenauftritt, insbesondere in Verbindung mit mobilen Rucksack-Getränkebereitem nicht geeignet war, einen hochwertigen qualitativen Gesamteindruck zu vermitteln.

Des Weiteren besteht oftmals in Verbindung mit mobilen Kaffeebars die Problematik, dass zwar qualitativ hochwertiger Kaffee als solches angeboten werden kann, jedoch nicht qualitativ hochwertiger Milchschaum zur Zubereitung von qualitativ hochwertigen Milchschaum-Kaffeeprodukten. Hier ist es bereits versucht worden, eine Milchaufschäumung mit kleinen batteriebetriebenen Handquirls vor Ort beim Kunden, zum Beispiel in Zügen, durchzuführen, was sich jedoch als vollkommen untauglich und unpraktikabel erwiesen hat. Weitere Stand der Technik Dokumente in diesem Thema sind: EP 1 674 006, US 5 241 898, WO 03/070571, US 5 858 437, WO 92/06617.
Es ist daher Aufgabe der vorliegenden Erfindung, eine Bereitstellungsvorrichtung für Milchschaum-Kaffee und Milchschaum zur Verfügung zu stellen, mittels der Milchschaum-Kaffee bzw. Milchschaum auf funktionssichere und qualitativ hochwertige Weise erzeugt werden kann.

Die Erfindung wird bezüglich der Milchschaum-Kaffee-Bereitstellungsvorrichtung gelöst mit den Merkmalen des Patentanspruchs 1. Vorteilhafte Ausgestaltungen hierzu sind Gegenstand der darauf rückbezogenen Unteransprüche.

Gemäß Patentanspruch 1 wird eine Milchschaum-Kaffee-Bereitstellungsvorrichtung mit einem Milchschaum-Kaffee-Getränkebereiter vorgeschlagen, der von einer bereiterextemen Energiezuführung unabhängig und mobil ausgeführt ist, wobei der mobile Milchschaum-Kaffee-Getränkebereiter eine Behälteraufnahme für wenigstens einen Kaffeebehälter und für wenigstens einen, Milch zur Zubereitung von Milchschaum aufweisenden Milchschaum-Milchbehälter aufweist, die jeweils durch wechselbare und nachfüllbare Flüssigkeitsbehälter gebildet sind. Der mobile Milchschaum-Kaffee-Getränkebereiter weist wenigstens ein, vorzugsweise manuell betätigbares Kaffee-Zapfventil, das dem wenigstens einen KaffeeBehälter zugeordnet ist, und wenigstens ein, vorzugsweise manuell betätigbares Milchschaum-Zapfventil auf, das dem Milchschaum-Milchbehälter zugeordnet ist. Dem Milchschaum-Milchbehälter ist ferner ein Treibmittel, bevorzugt ein Schäum- und Treibmittel, zum Beispiel Distickstoffmonoxid (N₂O) als Schäum- und Treibmittel, zugeordnet, wobei bei einer Betätigung des Milchschaum-Zapfventils Milchschaum, insbesondere zur Bereitung eines Milchschaum-Kaffee-Getränkes, austritt. Erfindungsgemäß ist vorgesehen, dass die Kaffee-Bereitstellungsvorrichtung weiter eine von dem Milchschaum-Kaffee-Getränkebereiter unabhängige Zentralstation mit einem Zentralstation-Kaffeebereiter aufweist, der mit einer Steuereinrichtung gekoppelt ist, mittels der eine definierte Kaffeemenge zur Abfüllung in einen leeren Kaffeebehälter des Milchschaum-Kaffee-Getränkebereiters dergestalt programmgesteuert erzeugbar ist
- dass an der Zentralstation eine definierte, vorzugsweise stets gleiche Menge eines Kaffeepulvers in einen, vorzugsweise mit einem Kaffeefilter versehenen Topf als weiteren Bestandteil des Zentralstation-Kaffeebereiters eingebracht wird, und
- dass an der Zentralstation eine definierte, vorzugsweise stets gleiche Menge an heißem Wasser mit definierter, vorzugsweise stets gleicher Temperatur mittels einer Beregnungsvorrichtung als weiteren Bestandteil des Zentralstation-Kaffeebereiters in den mit dem gemahlenen Kaffeepulver befüllten Topf eingebracht wird.

Der Topf weist weiter einen Topf-Auslass auf, über den das Kaffeeextrakt schließlich mittelbar oder unmittelbar in den lösbar und austauschbar in der Zentralstation gelagerten, leeren Kaffeebehälter des mobilen Milchschaum-Kaffee-Getränkebereiters einbringbar ist.

Mit einer derartigen erfindungsgemäßen Lösung, bei der an einer Zentralstation ein Zentralstation-Kaffeebereiter zur Verfügung gestellt wird, mittels der eine Kaffeebereitung für die Kaffeebehälter des mobilen Milchschaum-Kaffee-Getränkebereiters in stets gleichbleibender Weise durchgeführt werden kann, wird auf einfache Weise sichergestellt, dass beim Kunden vor Ort, das heißt entfernt von der Zentralstation stets eine gewünschte gleiche, hochwertige Kaffeequalität und damit ein qualitativ hochwertiges Milchschaum-Kaffee-Getränk angeboten bzw. kredenzt werden kann. Mit einem derartigen erfindungsgemäßen Set als Milchschaum-Kaffee-Bereitstellungsvorrichtung, das neben dem bzw. den vorzugsweise mehreren mobilen Milchschaum-Kaffee-Getränkebereitern zudem eine Zentralstation aufweist, an der für sämtliche mobile Milchschaum-Kaffee-Getränkebereiter eine stets gleiche Kaffeequalität zubereitet werden kann, lässt sich somit von den Baristi beim Kunden vor Ort stets ein qualitativ hochwertiges Milchschaum-Kaffeegetränk nach dem Gusto des Kunden herstellen. Die programm- bzw. chipgesteuerte Kaffeeherstellung mittels des Zentralstation-Kaffeebereiters an einer Zentralstation hilft somit wesentlich, die Qualität der angebotenen Kaffee-Spezialitäten dauerhaft zu gewährleisten.

Die Beregnungsvorrichtung des Zentralstation-Kaffeebereiters ist dabei vorzugsweise so ausgelegt, dass das heiße Wasser tropfenweise und/oder gepulst bzw. stoßweise in den mit dem gemahlenen Kaffeepulver befüllten Topf eingebracht wird. Erfinderseitige Versuche hierzu haben gezeigt, dass bei einer derartigen gepulsten, chargen- und tröpfchenweisen Zuführung des heißen Wassers eine schonendere Extraktion des Kaffeepulvers erfolgt als die beim im Wesentlichen kontinuierlich zudosieren von Heißwasser mittels einer Beregnungsvorrichtung der Fall ist, so dass diese besonders bevorzugte tropfenweise und/oder gepulste bzw. stoßweise Zuführung des heißen Wassers zum mit dem gemahlenen Kaffeepulver befüllten Topf weiter dazu beiträgt, die Qualität des hergestellten Kaffees zu steigern.

Gemäß einer weiteren besonders bevorzugten Ausstattungsvariante ist die Zentralstation ferner mit einer Treibmittel-Befüllstation ausgestattet, die vorzugsweise durch einen Druckluftspeicher für den Kaffeebehälter und/oder durch einen Schäum- und Treibmittelspeicher für den Milchschaum-Milchbehälter gebildet ist. An der Treibmittel-Befüllstation kann der wenigstens eine mit Kaffee befüllte Kaffeebehälter mit einem Treibmittel, vorzugsweise mit Druckluft, befüllt werden, so dass der mobile Milchschaum-Kaffee-Getränkebereiter mit einem Kaffeebehälter beschickt werden kann, aus dem der Kaffee bei einer Betätigung des Kaffee-Zapfventils mit einem definierten Druck austritt. Ferner kann alternativ oder zusätzlich an der Treibmittel-Befüllstation der wenigstens eine mit Milch zum Erzeugen von Milchschaum befüllte Milchschaum-Milchbehälter des Milchschaum-Kaffee-Getränkebereiters mit einem Treibmittel, vorzugsweise mit Distickstoffmonoxid (N₂O) als Schäum- und Treibmittel, befüllt werden. Grundsätzlich könnte der Milchschaum-Milchbehälter aber auch mit einer daran austauschbar angeordneten Druck- oder Gaspatrone versehen sein, mittels der ein Treibmittel, vorzugsweise Distickstoffmonoxid (N₂O) als Schäum- oder Treibmittel in den Milchbehälter eingeführt wird. In diesem Fall reicht es dann aus, an der Treibmittel-Befüllstation lediglich ein Treibmittel für den Kaffeebehälter vorzuhalten.

Mit einer derartigen Befüllmöglichkeit des Kaffeebehälters mit einem Treibmittel wird auf einfache Weise sichergestellt, dass die Baristi der mobilen Milchschaum-Kaffee-Getränkebereiter auch bei niedrigen Füllständen des Kaffees im Kaffeebehälter bei einer Betätigung des Kaffee-Zapfventils stets einen Kaffee mit dem gewünschten Druck einfach und schnell in ein Trinkgefäß abzapfen können. Ein qualitativ wenig hochwertig wirkendes Eintröpfeln oder ein Rinnsal bei niedrigen Füllständen des Kaffees im Kaffeebehälter wird hierdurch auf funktionssichere Weise zuverlässig vermieden. Das Gleiche gilt in analoger Weise für die Beschickung des Milchschaum-Milchbehälters an der Zentralstation mit einem Treibmittel, bevorzugt mit einem Schäum- und Treibmittel, da auch hierdurch auf einfache Weise sichergestellt wird, dass die Baristi bei einer Betätigung des Milchschaum-Zapfventils stets einen hochwertigen Milchschaum erzeugen können.

Die Bereitstellung der Treibmittel-Befüllstation an der Zentralstation, an der sich auch der Zentralstation-Kaffeebereiter befindet, hat weiter den Vorteil, dass bei einer Wiederbefüllung der leeren Kaffeebehälter bzw. der leeren Milchschaum-Milchbehälter an der Zentralstation dort gleichzeitig auch das Treibmittel abgezapft und in die Flüssigkeitsbehälter eingebracht werden kann, wodurch auf einfache Weise sichergestellt wird, dass die mobilen Milchschaum-Kaffee-Getränkebereiter in der gewünschten Weise mit entsprechend vorbereiteten Kaffeebehältern bzw. Milchschaum-Milchbehältern bestückt werden. Die Zentralstation stellt somit die universale Anlaufstelle für die Baristi dar, bzw. diejenigen Bedienpersonen dar, die die mobilen Milchschaum-Kaffee-Getränkebereiter für den mobilen Einsatz vorbereiten und ausstatten. Insofern wird auf einfache Weise eine gleichbleibende Ausstattung der mobilen Milchschaum-Kaffee-Getränkebereiter sichergestellt und eine Fehlbestückung zuverlässig vermieden.

Gemäß einer weiteren besonders bevorzugten Ausgestaltung wird vorgeschlagen, dass der Zentralstation-Kaffeebereiter und damit die Zentralstation ferner eine mit Kaffeebohnen bestückbare bzw. bestückte Kaffeemühle aufweist, mittels der ein frisch gemahlenes Kaffeepulver unmittelbar an der Zentralstation erzeugt werden kann. Gemäß einer hierzu besonders bevorzugten optionalen Ausgestaltung ist vorgesehen, dass der Kaffeemühle ferner eine Aufnahme- und/oder Abstelleinrichtung für den vorzugsweise mit einem Filter bestückten und dann einen Filtertopf ausbildenden Topf zugeordnet ist. Mit einer derartigen Kaffeemühle wird auf einfache Weise sichergestellt, dass programmgesteuert mit der Steuereinrichtung eine definierte, vorzugsweise stets gleiche Menge eines frisch gemahlenen Kaffeepulvers in den vorzugsweise mit einem Filter bestückten Topf eindosiert wird, wodurch, wie bereits zuvor beschrieben, sichergestellt wird, dass stets eine gleichbleibende Kaffeequalität erzielt werden kann. Die Möglichkeit, den Kaffee mittels der Kaffeemühle aus Bohnen frisch direkt an der Zentralstation zu mahlen, bewirkt weiter eine deutliche Qualitätssteigerung des mit dem Zentralstation-Kaffeebereiter hergestellten frischen Kaffees.

Gemäß einer weiteren besonders bevorzugten Ausgestaltung der vorliegenden Erfindungsidee ist vorgesehen, dass der Zentralstation-Kaffeebereiter eine Heizeinrichtung aufweist, der Wasser zuführbar ist und mittels der und/oder in der das Wasser programmgesteuert mittels der Steuereinrichtung auf die gewünschte Temperatur erhitzt werden kann. Besonders bevorzugt ist hierbei vorgesehen, dass der Heizeinrichtung ein Heißwasserspeicher zugeordnet oder in diese integriert ist, aus dem programmgesteuert mittels der Steuereinrichtung zu vorgegebenen Zeiten eine vorgegebene Wassermenge abziehbar und der Beregnungsvorrichtung, vorzugsweise stoßweise oder gepulst, zuführbar ist. Mittels einer derartigen zentralstationsseitigen Heizeinrichtung kann somit auch die Heißwasserbereitung in der gewünschten, kontrollierten Weise programmgesteuert an der Zentralstation mit den zuvor bereits genannten Vorteilen zentral durchgeführt werden.

Gemäß einer weiteren besonders bevorzugten Ausgestaltung der Milchschaum-Kaffee-Bereitstellungsvorrichtung ist vorgesehen, dass der Topf wenigstens einen zur Beregnungsvorrichtung hin offenen Bypasskanal aufweist, über den das von der Beregnungsvorrichtung dem Topf zugeführte Heißwasser zum Teil an dem Kaffeepulver-Aufnahmeraum des Topfes vorbeigeleitet wird, wobei der wenigstens eine Bypasskanal in den Topf-Auslass einmündet, so dass dort, insbesondere zur Eliminierung von Bitterstoffen, eine Vermischung von Bypasswasser und Roh-Kaffeeextrakt stromauf des zu befüllenden Kaffeebehälters stattfindet.

Gemäß einer weiteren besonders bevorzugten Ausgestaltung ist vorgesehen, dass der Zentralstation-Kaffeebereiter wenigstens eine Topfaufnahme aufweist, in die ein, vorzugsweise mit einem Filter bestückter und mit einer definierten Menge gemahlenen Kaffees beschickter Topf lösbar einsetzbar ist. Oberhalb, das heißt in Hochachsenrichtung der Zentralstation gesehen oberhalb dieser Topfaufnahme, ist die Beregnungsvorrichtung so angeordnet, dass der Auslass der Beregnungsvorrichtung unmittelbar oberhalb der Aufnahmeöffnung des in die Topfaufnahme eingesetzten Topfes angeordnet ist. In Hochachsenrichtung gesehen unterhalb der Topfaufnahme ist gemäß einer konkreten Ausführungsform eine Halteeinrichtung für einen Kaffeebehälter des mobilen Milchschaum-Kaffee-Getränkebereiters angeordnet. Mit einer derartigen konkreten Ausgestaltung des Zentralstation-Kaffeebereiters wird ein kompakter Aufbau zur Verfügung gestellt, der einfach bedienbar und handhabbar ist. Für größere Füllmengen kann es erforderlich sein, dass der Zentralstation-Kaffeebereiter mehrere derartiger Topfaufnahmen mitsamt Beregnungsvorrichtung und Halteeinrichtung für den Kaffeebehälter aufweist, die bevorzugt nebeneinander angeordnet sind. In diesem Fall kann dann die Beregnungsvorrichtung pro Topfaufnahme jeweils einen Auslass, bevorzugt jeweils einen duschkopfartigen Auslass aufweisen.

Gemäß einer weiteren besonders bevorzugten Ausgestaltung der vorliegenden Erfindungsidee weist die Zentralstation ferner wenigstens eine Milcherwärmungseinrichtung auf, mittels der Milch, insbesondere in handelsüblichen Verpackungseinheiten oder Gebinden abgefüllte Milch, zum Beispiel in einem Warmhalteofen als Milcherwärmungseinrichtung, auf eine definierte Temperatur erwärmt bzw. erhitzt werden kann. Die Milcherwärmungseinrichtung kann dabei beispielsweise so ausgelegt sein, dass diese zum Beispiel in unterschiedlichen und voneinander thermisch abgetrennten Heizkammem eine Erwärmung auf Temperaturen von 30°C bis 100°C ermöglicht. Dieser Milcherwärmungseinrichtung ist bevorzugt ebenfalls wiederum an der Zentralstation eine Befüllstation zugeordnet, an der erwärmte Milch in einen Milchbehälter des Milchschaum-Kaffee-Getränkebereiters einfüllbar ist. Alternativ oder zusätzlich dazu kann an der Zentralstation auch eine Zapfstation vorgesehen sein, mittels der erwärmte Milch in einen Milchbehälter des Milchschaum-Kaffee-Getränkebereiters einfüllbar ist. Neben der Kaffeebereitung kann somit mit der erfindungsgemäßen Zentralstation auch sichergestellt werden, dass auch die zur Befüllung bzw. Nachfüllung des Milchschaum-Milchbehälters erforderliche Milch dort zentral zur Verfügung gestellt wird. Wie die erfinderseitigen Versuche gezeigt haben, ergibt sich eine sehr gute Milchschaumqualität, wenn die in den Milchschaum-Milchbehältern abgefüllte Milch auf eine Temperatur von zwischen 30°C bis ungefähr 50°C vorerwärmt ist. Grundsätzlich besteht aber auch die Möglichkeit, den Milchschaum aus kalter Milch, das heißt Milch mit Raumtemperatur zu erzeugen, so dass dann entsprechend für diesen Fall die Milcherwärmungseinrichtung abgeschaltet ist oder aber anstelle der Milcherwärmungseinrichtung lediglich eine Milchbevorratungseinrichtung alternativ oder zusätzlich zur Milcherwärmungseinrichtung vorgesehen sein kann.

Bevorzugt weist der mobile Milchschaum-Kaffee-Getränkebereiter Aufnahmen für zwel unterschiedliche Arten von Milchbehältern auf, von denen die eine Art als Milchschaum-Milchbehälter mit Milch vorgegebener Temperatur, insbesondere von 30°C bis 40°C, zur Zubereitung des Milchschaums und die andere Art als Heißmilch-Milchbehälter mit demgegenüber wärmerer Milch, insbesondere mit einer Temperatur von 75°C bis 90°C, zur Bereitstellung von heißer Milch befüllt ist, wobei dem Milchschaum-Milchbehälter das Milchschaum-Zapfventil und dem Heißmilch-Milchbehälter ein Heißmilch-Zapfventil zugeordnet ist. Der Heißmilch-Mllchbehälter ist mit einem Treibmittel, vorzugsweise mit Druckluft, einer Treibmittel-Befüllstation, wie sie zuvor beschrieben worden ist, der Zentralstation befüllt, so dass bei einer Betätigung des Heißmilch-Zapfventils, heiße, flüssige Milch mit einem definierten Druck austritt. Mit einer derartigen Ausgestaltung steht somit in Verbindung mit den mobilen Milchschaum-Kaffee-Getränkebereitern auch heiße Milch zur Verfügung, was die Variantenvielfalt im Hinblick auf die angebotenen Kaffee-Spezialitäten nochmals wesentlich erhöht.

Der Milchschaum selbst kann grundsätzlich auf unterschiedliche Weise hergestellt sein. Gemäß einer besonders bevorzugten Ausgestaltung ist vorgesehen, dass der Milchschaum durch das dem Milchschaum-Milchbehälter zugesetzte Treibmittel, das dann ein Schäum- und Treibmittel ist, herstellbar ist. Alternativ oder auch zusätzlich dazu kann der Milchschaum aber auch durch eine dem Milchschaurn-Zapfventil zugeordnete und/oder in das Milchschaum-Zapfventil integrierte Milchschäum-Einrichtung, insbesondere eine Zerstäuber-Einrichtung, herstellbar sein. Eine derartige Milchschäum-Einrichtung bzw. Zerstäuber-Einrichtung kann beispielsweise durch eine Zerstäuberdüse oder ein Zerstäuberventil gebildet sein, wobei in diesem Zusammenhang bevorzugt vorgesehen ist, dass das Treibmittel, bevorzugt N₂O, die Milch mit Druck durch die Zerstäuber-Einrichtung treibt, mittels der die Milch zerstäubt und dann zusammen mit dem Treibmittel, das dann als Schäum- und Treibmittel fungiert, den Milchschaum bildet.

Die Zentralstation selbst wird bevorzugt durch ein schrankartiges Gehäuse gebildet, das mit den Bauteilen der Zentralstation bestückt ist, wobei bevorzugt vorgesehen ist, dass die Zentralstation ebenfalls als verfahrbare und/oder transportable Einheit ausgebildet ist. Damit kann die Zentralstation auf einfache Weise in die Nähe des Einsatzortes verbracht werden, zum Beispiel in die Nähe eines Stromanschlusses und/oder eines Wasseranschlusses in einem Gebäude oder dergleichen, so dass die Zentralstation so vor Ort aufgestellt und angeordnet werden kann, dass diese von den Baristi der mobilen Milchschaum-Kaffee-Getränkebereiter schnell und einfach angefahren werden können, um die Milchschaum-Kaffee-Getränkebereiter mit den benötigten Dingen auszustatten bzw. nachzurüsten. Gemäß einer besonders bevorzugten Ausgestaltung weist somit die Zentralstation eine Stromanschlussvorrichtung für einen Stromanschluss an ein Stromnetz und/oder eine Wasseranschlussvorrichtung für einen Wasseranschluss an eine Trinkwasserversorgung auf.

Gemäß einer besonders bevorzugten Ausgestaltung hierzu wird vorgeschlagen, dass die durch ein schrankartiges Gehäuse ausgebildete Zentralstation in der Mittel geteilt ist und zwei mittels einer Gelenk- und/oder Schamierverbindung mit vertikaler Gelenk- und/oder Scharnierachse miteinander klappbar oder schwenkbar verbundene, einen Aufnahmeraum ausbildende Gehäuseteile aufweist, die jeweils mit Bauteilen der Zentralstation bestückt sind, wobei die beiden Gehäuseteile im um die vertikale Gelenk-und/oder Schamierachse aufeinander geklappten Zustand eine wenigstens bereichsweise geschlossene, transportable und/oder verfahrbare Zentralstation ausbilden. In diesem Zusammenhang ist bevorzugt vorgesehen, dass die beiden Gehäuseteile mittels einer Schnellverschlussverbindung miteinander lösbar verbindbar und/oder an ihrer Unterseite Räder aufweisen.

Mit einer derartigen Ausgestaltung der Zentralstation wird auf einfache Weise der sichere und hygienische Transport derselben an unterschiedlichste Einsatzorte möglich.

Konkret weist die durch ein schrankartiges Gehäuse ausgebildete Zentralstation zwei mittels der Gelenk- und/oder Schamierverbindung in der Art eines Flight-Case klappbar oder schwenkbar verbundene wannenförmige Gehäuseteile mit jeweils einem, einen Gehäuseteil-Aufnahmeraum begrenzenden, umlaufenden Gehäuserahmen auf. Die beiden Gehäuseteile liegen daher im um die vertikale Gelenk- und/oder Scharnierachse aufeinandergeklappten Zustand mit ihren jeweiligen Gehäuserahmen aneinander an und bilden eine allseitig geschlossene transportable und/oder verfahrbare, kofferartige Zentralstation aus, in deren Innerem die Bauteile der Zentralstation aufgenommen sind, insbesondere vollständig geschützt aufgenommen sind.

Die Behälteraufnahme des mobilen Milchschaum-Kaffee-Getränkebereiters ist bevorzugt blockartig aus einem Wärmedämmmaterial hergestellt, in dem nach oben, das heißt in Hochachsenrichtung gesehen nach oben offene Aufnahmekammern zur Aufnahme der Flüssigkeitsbehälter ausgebildet sind. Besonders bevorzugt können dabei die einzelnen Flüssigkeitsbehälter wenigstens zum Teil durch Zwischenwände voneinander thermisch gedämmt oder getrennt angeordnet sein. Mit einer derartigen Behälteraufnahme aus einem Wärmedämmmaterial wird auf einfache Weise sichergestellt, dass die mit heißem Kaffee und warmer Milch bzw. heißer Milch befüllten Flüssigkeitsbehälter diese für eine definierte Zeitdauer ohne großen Temperaturverlust und damit ohne Qualitätsverlust, zum Beispiel zwei bis drei Stunden, speichert. Hierdurch eignet sich der Einsatz der mobilen Milchschaum-Kaffee-Getränkebereiter insbesondere für weitläufige Großveranstaltungen, wie zum Beispiel Messen, wo zum Beispiel unterschiedliche Messehallen von den Baristi angefahren und, zum Beispiel auf Anforderung durch einen Standbetreiber, vor Ort qualitativ hochwertige Kaffee-Spezialitäten kredenzen können.

Besonders bevorzugt ist eine Ausgestaltung, die als Michschaum-Kaffee-Getränkebereiter, insbesondere zur Verwendung in einer Milchschaum-Kaffee-Bereitstellungsvorrichtung, ausdrücklich auch separat und unabhängig von der Zentralstation bzw. der Milchschaum-Kaffee-Bereitstellungsvorrichtung beansprucht wird, bei der der mobile Milchschaum-Kaffee-Getränkebereiter in optisch ansehnlicher Weise als fahrbarer Service-Trolley, insbesondere ähnlich denjenigen, wie sie im Flugzeug im Passagier-Servicebereich benutzt werden, ausgebildet ist. Derartige Service-Trolleys sind sowohl technisch als auch gestalterisch hochwertig ausgebildet und weisen vorzugsweise einen mittels einer Abdeckung verschließbaren Aufnahmeraum für die Behälteraufnahme auf, wobei eine die Zapfventile aufweisende Zapfeinheit entsprechend trolleyaußenseitig angeordnet ist.

Gemäß einer hierzu besonders bevorzugten Ausgestaltung wird vorgeschlagen, dass der Service-Trolley ferner einen weiteren Aufnahmeraum mit einer Mehrzahl von darin schubladenartig aufgenommenen Staufächern aufweist, wobei dieser Aufnahmeraum vorzugsweise mittels wenigstens einer öffenbaren Abdeckung verschließbar ist und unabhängig von dem Aufnahmeraum für die Behälteraufnahme ausgebildet und/oder zugänglich sein soll. Die Abdeckung kann Luftlöcher und/oder -schlitze zum Abführen der warmen Luft ofenfrischer Backwaren aufweisen. Zudem dient die Abdeckung dem hygienischen Schutz und Transport von Esswaren. Insbesondere kann dieser Aufnahmeraum von dem Aufnahmeraum für die Behälteraufnahme durch eine Zwischenwandanordnung abgetrennt sein. Ein derartiger zusätzlicher Aufnahmeraum mit einer Mehrzahl von darin schubladenartig aufgenommenen Staufächem eignet sich insbesondere zum Verstauen von Lebensmitteln, wie beispielsweise Getränken, zum Beispiel Smoothies, Süßigkeiten, etc. sowie sonstige in Verbindung mit einem Kaffeegenuss erforderlichen Utensilien, wie beispielsweise Zucker, Liköre, Löffel, Servietten, oder dergleichen mehr. Konkret weist der Service-Trolley bevorzugt eine im Wesentlichen horizontal verlaufende Deckenwand, an der die Zapfeinheit montiert ist, und/oder eine kastenartige, rechteckblockförmige Außenkontur auf, wobei wenigstens eine der vertikalen Seitenwände die den wenigstens einen Aufnahmeraum verschließende, öffenbare Abdeckung, zum Beispiel in Form von schwenkbar angelenkten Türen, aufweist oder ausbildet. Insbesondere in Verbindung mit zwei Aufnahmeräumen, einem für die Behälteraufnahme und einem anderen für die verschiedenen schubladenartigen Staufächem ist eine Ausführungsform bevorzugt, bei der die Aufnahmeräume von gegenüberliegenden Seiten her zugänglich und zum Beispiel mittels einer Schwenktür abschließbar sind.

Gemäß einer weiteren besonders bevorzugten Ausgestaltung der vorliegenden Erfindungsidee kann vorgesehen sein, dass der den mobilen Milchschaum-Kaffee-Getränkebereiter ausbildende Service-Trolley Bestandteil eines Sets von mehreren Service-Trolleys ist, die einen im Wesentlichen gleichen Grundaufbau aufweisen und dessen wenigstens einer Aufnahmeraum anstelle der Behälteraufnahme mit einer Batterieeinheit bestückbar ist, die mit einer anstelle der Zapfeinheit am Service-Trolley verbauten Kapsel-Extraktionsmaschine, insbesondere einer Kapsel-Kaffeemaschine gekoppelt ist, die einen befüllbaren Wasserspeicher aufweist, aus dem heraus Wasser abzapfbar ist. Das Wasser, das bevorzugt mit einer Heizeinrichtung erhitzbar ist, wird einer Kapselaufnahme, in der eine, ein zu extrahierendes Substrat, zum Beispiel Kaffee, in vorpositionierter Form, insbesondere in Pulverform, aufnehmende Kapsel eingesetzt ist, so zugeführt, dass das vorzugsweise heiße Wasser durch die Kapsel und das Substrat hindurchgepresst und als Extrakt, insbesondere als Kaffeeextrakt aus der Kapsel-Kaffeemaschine abziehbar ist. Hierdurch wird die Flexibilität und Funktionalität des Servicesystems insgesamt wesentlich erhöht, da zusätzlich oder alternativ zur Milchschaum-Kaffeezubereitung auch eine einfach und schnell bedienbare Kaffeemaschine, zum Beispiel zur schnellen Espresso-Bereitung, bereitgehalten werden kann und somit noch mehr Kundenwünsche befriedigt werden können. Anstelle einer Kapsel-Kaffeemaschine könnte selbstverständlich auch ein Kaffeevollautomat eingesetzt werden bzw. Verwendung finden. Ebenso könnte grundsätzlich auch vorgesehen sein, dass eine derartige Kaffeemaschine, zum Beispiel eine Kapsel-Kaffeemaschine oder ein Kaffeevollautomat, zusätzlich zu der jeweiligen Zapfeinheit auf dem gleichen Trolley angeordnet ist. In diesem Fall wäre dann ein Aufnahmeraum für die Batterieeinheit und die Behälteraufnahme trolleyseitig vorzusehen. Wie die eben gemachten Ausführungen zeigen, ergeben sich vielfältigste Variationsmöglichkeiten zur Bestückung der Trolleys.

Gemäß einer weiteren besonders bevorzugten Ausgestaltung kann auch vorgesehen sein, dass mehrere Service-Trolleys ein Set von mit gleichen und/oder unterschiedlichen Funktionseinheiten bestückten Service-Trolleys ausbilden. Alternativ oder zusätzlich können die Service-Trolleys auch so ausgebildet sein, dass diese miteinander durch entsprechende Verbindungsmittel lösbar verbindbar und damit auch gemeinsam verfahrbar sind. Hierdurch wird die Funktionalität ebenfalls nochmals wesentlich erhöht.

Die mit einem Treibmitel beschickbaren und Kaffee- und/oder Milchbehälter ausbildenden Flüssigkeitsbehälter des erfindungsgemäßen Milchschaum-Kaffee-Bereitstellungssystems weisen bevorzugt eine längliche und/oder im Wesentlichen zylindrische Form auf, wobei an einer, bezogen auf den in der Behälteraufnahme aufgenommenen Zustand, oberen Behälter-Stirnseite, die vorzugsweise durch einen abnehmbaren, insbesondere aufschraubbaren Deckel gebildet ist, ein in den Behälter mit einem Spaltabstand bis zum Bodenbereich einragendes Steigrohr gehaltert ist. Dieses Steigrohr ist mittelbar oder unmittelbar mit dem jeweils zugeordneten Zapfventil gekoppelt. Mit einer derartigen Steigrohranordnung wird auf einfache Weise eine sichere Abzapfmöglichkeit für die jeweilige Flüssigkeit sichergestellt. Gemäß einer weiteren besonders bevorzugten Ausgestaltung ist der bzw. sind die Flüssigkeitsbehälter mit einer Überdrucksicherung versehen und weisen ein Anschlussventil für das Einbringen des jeweiligen Treibmittels in den Flüssigkeitsbehälter auf. Dieses Anschlussventil kann grundsätzlich an unterschiedlichen Bereichen des Flüssigkeitsbehälters angeordnet sein, ist jedoch bevorzugt ebenfalls an der insbesondere durch einen abnehmbaren bzw. aufschraubbaren Deckel gebildeten oberen Stirnseite angeordnet. Die Flüssigkeitsbehälter selbst können zum Beispiel für ein Füllvolumen von drei bis fünf Liter ausgelegt sein, was aber nur beispielhaft zu verstehen ist. Zweckmäßig werden aus Festigkeits- und Hygienegründen die Flüssigkeitsbehälter durch Edelstahlbehälter gebildet. Da sämtliche Behälter mit einem Treibmittel versehen sein können, ist es ferner zweckmäßig, die Flüssigkeitsbehälter als Druckbehälter auszubilden.

Neben den eben beschriebenen besonders bevorzugten Ausgestaltungen der Zentralstation kann diese ferner zusätzlich mit wenigstens einem Backofen und/oder wenigstens einer Kühleinrichtung und/oder wenigstens einer Tiefkühleinrichtung und/oder wenigstens einem Spülbecken mit Spülarmatur und/oder wenigstens einem Staufach und/oder mit wenigstens einem Heißwasserspeicher und/oder mit wenigstens einer Mikrowelleneinheit ausgestattet beziehungsweise gekoppelt sein, wodurch die Funktionalität derselben nochmals wesentlich erhöht werden kann.

Bezüglich der Milchschaum-Bereitstellungsvorrichtung wird die Aufgabe ferner gelöst durch die Merkmale des Anspruchs 15.

Gemäß Anspruch 15 wird eine Milchschaum-Bereitstellungsvorrichtung vorgeschlagen, die entweder durch einen von einer bereiterextemen Energiezuführung unabhängig und mobil ausgeführten Milchschaum-Bereiter gebildet ist oder einen solchen aufweist, wobei der mobile Milchschaum-Bereiter eine Behälteraufnahme für wenigstens einen, Milch zur Zubereitung von Milchschaum aufweisenden Milchschaum-Behälter aufweist, der durch einen wechselbaren und nachfüllbaren Flüssigkeitsbehälter gebildet ist. Der mobile Milchschaum-Bereiter weist wenigstens ein, vorzugsweise manuell betätigbares Milchschaum-Zapfventil auf, das dem Milschaum-Milchbehälter zugeordnet ist, wobei dem Milchschaum-Milchbehälter ferner ein Treibmittel, bevorzugt ein Schäum- und Treibmittel höchst bevorzugt Distickstoffmonoxid (N₂O) als Schäum- und Treibmittel zugeordnet ist und wobei bei einer Betätigung des Milchschaum-Zapfventils Milchschaum, insbesondere zur Bereitung eines Milchschaum-Kaffee-Getränkes, austritt. Gemäß einer besonders bevorzugten Ausgestaltung ist vorgesehen, dass der Milchschaum durch das dem Milchschaum-Milchbehälter zugesetzte Treibmittel, das dann ein Schäum- und Treibmittel ist, herstellbar ist. Alternativ oder auch zusätzlich dazu kann der Milchschaum aber auch durch eine dem Milchschaum-Zapfventil zugeordnete und/oder in das Milchschaum-Zapfventil integrierte Milchschäum-Einrichtung, insbesondere eine Zerstäuber-Einrichtung, herstellbar sein. Eine derartige Milchschäum-Einrichtung bzw. Zerstäuber-Einrichtung kann beispielsweise durch eine Zerstäuberdüse oder ein Zerstäuberventil gebildet sein, wobei in diesem Zusammenhang bevorzugt vorgesehen ist, dass das Treibmittel, bevorzugt N₂O, die Milch mit Druck durch die Zerstäuber-Einrichtung treibt, mittels der die Milch zerstäubt und dann zusammen mit dem Treibmittel, das dann als Schäum- und Treibmittel fungiert, den Milchschaum bildet.

Eine derartige erfindungsgemäße Milchschaum-Bereitstellungsvorrichtung erlaubt die mobile Bereitstellung von qualitativ hochwertigem Milchschaum und kann zum Beispiel zusätzlich zu einer weiteren mobilen Kaffee-Bereitereinrichtung (zum Beispiel einem Service-Trolley mit Kaffeemaschine) vorgesehen sein, mittels der dem Kunden vor Ort ein Kaffee angeboten wird, der zum Beispiel mit einem Milchschaum versetzt werden soll. Gemäß einer besonders bevorzugten Ausgestaltung weist die Milchschaum-Bereitstellungsvorrichtung weiter eine von dem Milchschaumbereiter unabhängige, vorzugsweise mobile Treibmittel-Befüllstation auf, die einen Treibmittelspeicher, vorzugsweise einen Schäum- und Treibmittelspeicher, für den Milchschaum-Milchbehälter aufweist. Dadurch wird sichergestellt, dass der wenigstens eine mit dem Milch zum Erzeugen von Milchschaum befüllte Milchschaum-Milchbehälter des Milchschaumbereiters an der Treibmittel-Befüllstation auf zuverlässige und funktionssichere Weise mit einem Treibmittel vorzugsweise mit Distickstoffmonoxid (N₂O) als Schäum- und Treibmittel, befüllt werden kann. Eine derartige unabhängige, vorzugsweise Treibmittel-Befüllstation kann somit eine Art Zentralstation ausbilden, die in der Nähe des Einsatzortes des mobilen Milchschaum-Bereiters bereitgehalten wird, um sicherzustellen, dass die Milchschaum-Milchbehälter stets in der erforderlichen Weise mit dem Treibmittel, vorzugsweise mit einem Schäum-und Treibmittel, befüllt werden können. Alternativ könnte aber auch hier dem Milchschaum-Milchbehälter eine austauschbare Druck- oder Gaspatrone zugeordnet sein, mittels der ein Treibmittel, vorzugsweise N₂O als Schäum-und Treibmittel in den Milchbehälter eingebracht wird.

Der mobile Milchschaum-Bereiter kann gemäß einer optionalen Ausführungsvariante auch Aufnahmen für zwei unterschiedliche Arten von Milchbehältern aufweisen, von denen die eine Art als Milchschaum-Milchbehälter mit Milch vorgegebener Temperatur, insbesondere von 30°C bis 50°C, zur Zubereitung des Milchschaums und die andere Art als Heißmilch-Milchbehälter mit demgegenüber wärmerer Milch, insbesondere mit einer Temperatur von 75°C bis 90°C, zur Bereitstellung von heißer Milch befüllt ist, wobei dem Milchschaum-Milchbehälter das Milchschaum-Zapfventil und dem Heißmilch-Milchbehälter ein Heißmilch-Zapfventil zugeordnet ist. In diesem Zusammenhang weist dann die Treibmittel-Befüllstation wenigstens einen Treibmittelspeicher, vorzugsweise mit Druckluft als Treibmittel, für den Heißmilch-Milchbehälter aufweist, so dass der Heißmilchbehälter an der Treibmittel-Befüllstation mit einem Treibmittel, vorzugsweise mit Druckluft, befüllbar ist Und bei einer Betätigung des Heißmilch-Zapfventils heiße, flüssige Milch mit einem definierten Druck austritt

Alternativ, besonders bevorzugt aber zusätzlich zu der Treibmittel-Befüllstation kann ferner vorgesehen sein, dass die Milchschäum-Bereitstellungsvorrichtung wenigstens eine von dem Milchschaum-Bereiter unabhängige, vorzugsweise mobile Milcherwärmungseinrichtung aufweist, mittels der Milch, insbesondere in handelsüblichen Verpackungseinheiten oder Gebinden abgefüllte Milch, auf eine definierte Temperatur, insbesondere auf eine Temperatur von 30°C bis 100°C, erwärmbar ist. Dieser Milcherwärmungseinrichtung ist bevorzugt ebenfalls wiederum an der Zentralstation eine Befüllstation zugeordnet, an der erwärmte Milch in einen Milchbehälter des Milchschaum-Bereiters einfüllbar ist. Alternativ oder zusätzlich dazu kann an der Zentralstation auch eine Zapfstation vorgesehen sein, mittels der erwärmte Milch in einen Milchbehälter des Milchschaum-Bereiters einfüllbar ist. Damit wird sichergestellt, dass auch die zur Befüllung bzw. Nachfüllung des Milchschaum-Milchbehälters erforderliche Milch zentral zur Verfügung gestellt wird. Wie die erfinderseitigen Versuche gezeigt haben, ergibt sich eine sehr gute Milchschaumqualität, wenn die in den Milchschaum-Milchbehältem abgefüllte Milch auf eine Temperatur von zwischen 30°C bis ungefähr 50°C vorerwärmt ist. Grundsätzlich besteht aber auch die Möglichkeit, den Milchschaum aus kalter Milch, das heißt Milch mit Raumtemperatur zu erzeugen, so dass dann entsprechend für diesen Fall die Milcherwärmungseinrichtung abgeschaltet ist oder aber anstelle der Milcherwärmungseinrichtung lediglich eine Milchbevorratungseinrichtung alternativ oder zusätzlich zur Milcherwärmungseinrichtung vorgesehen sein kann.

Wie bereits zuvor erwähnt, ist es besonders bevorzugt, dass die Treibmittel-Befüllstation und die wenigstens eine Milcherwärmungseinrichtung vorzugsweise Bestandteil einer Zentralstation sind, die bevorzugt als mobile bzw. transportierbare und/oder verfahrbare Zentralstation ausgebildet ist. Auch hier kann die Zentralstation durch ein schrankartiges Gehäuse ausgebildet sein, wie dies bereits zuvor in Verbindung mit der Milchschaum-Kaffee-Bereitstellungsvorrichtung ausführlich beschrieben worden ist.

Gemäß einer weiteren besonders bevorzugten Ausgestaltung kann die Behälteraufnahme des mobilen Milchschaum-Bereiters blockartig aus einem Wärmedämmmaterial hergestellt sein, in dem eine nach oben offene Aufnahmekammer zur Aufnahme des Milchschaum-Milchbehälters sowie gegebenenfalls eines Heißmilch-Milchbehälters ausgebildet ist. Mit einer derartigen Behälteraufnahme aus einem Wärmedämmmaterial wird auf einfache Weise sichergestellt, dass der mit warmer Milch befüllte Milchschaum-Milchbehälter bzw. gegebenenfalls auch ein mit heißer Milch befüllter Heißmilch-Milchbehälter diese für eine definierte Zeitdauer ohne großen Temperaturverlust und damit ohne Qualitätsverlust, zum Beispiel zwei bis drei Stunden, speichert.

Gemäß einer weiteren besonders bevorzugten Ausgestaltung, die als mobiler Milchschaum-Bereiter ausdrücklich auch separat beansprucht wird, ist vorgesehen, dass der mobile Milchschaum-Bereiter als fahrbarer Service-Trolley, insbesondere ähnlich denjenigen, wie sie im Flugzeug im Passagier-Servicebereich benutzt werden, ausgebildet ist, der einen vorzugsweise mittels einer Abdeckung verschließbaren Aufnahmeraum für die Behälteraufnahme aufweist, wobei eine wenigstens das Milchschaum-Zapfventil sowie gegebenenfalls ein Heißmilch-Zapfventil aufweisende Zapfeinheit trolleyaußenseitig angeordnet ist. Derartige Service-Trolleys sind sowohl technisch als auch gestalterisch hochwertig ausgebildet und weisen vorzugsweise einen mittels einer Abdeckung verschließbaren Aufnahmeraum für die Behälteraufnahme auf.

Gemäß einer hierzu besonders bevorzugten Ausgestaltung wird vorgeschlagen, dass der Service-Trolley ferner einen weiteren Aufnahmeraum mit einer Mehrzahl von darin schubladenartig aufgenommenen Staufächern aufweist, wobei dieser Aufnahmeraum vorzugsweise mittels einer öffenbaren Abdeckung verschließbar ist und unabhängig von dem Aufnahmeraum für die Behälteraufnahme ausgebildet und/oder zugänglich sein soll. Insbesondere kann dieser Aufnahmeraum von dem Aufnahmeraum für die Behälteraufnahme durch eine Zwischenwandanordnung abgetrennt sein. Ein derartiger zusätzlicher Aufnahmeraum mit einer Mehrzahl von darin schubladenartig aufgenommenen Staufächern eignet sich insbesondere zum Verstauen von Lebensmitteln, wie beispielsweise Getränken, zum Beispiel Smoothies, Süßigkeiten, etc. sowie sonstige in Verbindung mit einem Kaffeegenuss erforderlichen Utensilien, wie beispielsweise Zucker, Liköre, Löffel, Servietten, oder dergleichen mehr. Konkret weist der Service-Trolley bevorzugt eine im Wesentlichen horizontal verlaufende Deckenwand, an der die Zapfeinheit montiert ist, und/oder eine kastenartige, rechteckblockförmige Außenkontur auf, wobei wenigstens eine der vertikalen Seitenwände die den wenigstens einen Aufnahmeraum verschließende, öffenbare Abdeckung, zum Beispiel in Form von schwenkbar angelenkten Türen, aufweist oder ausbildet. Insbesondere in Verbindung mit zwei Aufnahmeräumen, einem für die Behälteraufnahme und einem anderen für die verschiedenen schubladenartigen Staufächem ist eine Ausführungsform bevorzugt, bei der die Aufnahmeräume von gegenüberliegenden Seiten her zugänglich und zum Beispiel mittels einer Schwenktür abschließbar sind.

Auch in Verbindung mit der Milchschaum-Bereitstellungsvorrichtung gilt wieder, dass mehrere Service-Trolleys ein Set von mit gleichen und/oder unterschiedlichen Funktionseinheiten bestückten Service-Trolleys ausbilden können und/oder dass die Service-Trolleys so ausgebildet sein können, dass diese miteinander lösbar verbindbar und damit gemeinsam verfahrbar sind.

Der wenigstens eine mit einem Treibmittel beschickbare Flüssigkeitsbehälter, insbesondere ein Milchschaum-Milchbehälter, weist bevorzugt eine längliche und/oder im Wesentlichen zylindrische Form auf, wobei an einer, bezogen auf den in der Behälteraufnahme aufgenommenen Zustand, oberen BehälterStirnseite, die vorzugsweise durch einen abnehmbaren, insbesondere aufschraubbaren Deckel gebildet ist, ein in den Behälter mit einem Spaltabstand bis zum Bodenbereich einragendes Steigrohr gealtert ist. Dieses Steigrohr ist mittelbar oder unmittelbar mit dem jeweils zugeordneten Zapfventil gekoppelt. Mit einer derartigen Steigrohranordnung wird auf einfache Weise eine sichere Abzapfmöglichkeit sichergestellt. Gemäß einer weiteren besonders bevorzugten Ausgestaltung ist der bzw. sind die Flüssigkeitsbehälter mit einer Überdrucksicherung versehen und weisen diese ein Anschlussventil für das Einbringen des bevorzugt Schäum- und Treibmittels auf. Dieses Anschlussventil kann grundsätzlich an unterschiedlichen Bereichen des Flüssigkeitsbehälters angeordnet sein, ist jedoch bevorzugt ebenfalls an der insbesondere durch einen abnehmbaren bzw. aufschraubbaren Deckel gebildeten oberen Stirnseite angeordnet. Zweckmäßig werden aus Festigkeits- und Hygienegründen die Behälter durch Edelstahlbehälter gebildet. Da sämtliche Behälter mit einem Treibmittel versehen sein können, ist es ferner zweckmäßig, diese als Druckbehälter auszubilden.

Ferner wird ein Verfahren zur Zubereitung von Milchschaum-Kaffee bzw, von Milchschaum mittels einer Bereitstellungsvorrichtung mit den Merkmalen des Anspruchs 16 gelöst. Die sich diesbezüglich ergebenden Vorteile wurden bereits zuvor ausführlich gewürdigt, so dass diesbezüglich auf die zuvor gemachten Ausführungen verwiesen wird.

Ferner wird mit Anspruch 17 ganz generell ein Service-Trolley beansprucht, wie er beispielsweise vorstehend beschrieben wurde.

Die Erfindung wird nachfolgend anhand einer Zeichnung näher erläutert.

Es zeigen:

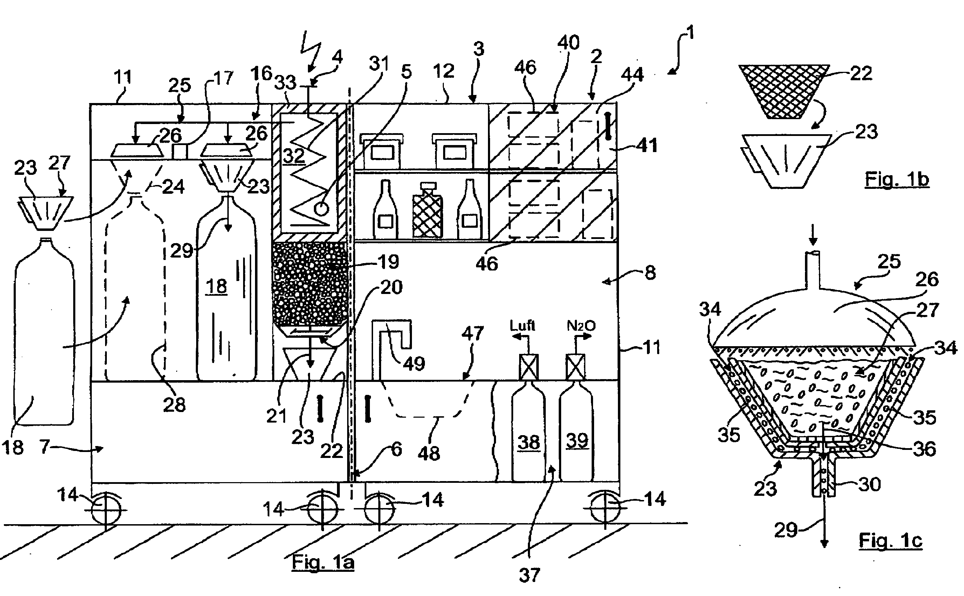

- Fig. 1: schematisch eine beispielhafte Ausführungsform einer Zentralstation,
- Fig. 1 b: schematisch die Beschickung eines Filtertopfes mit einem Filter,
- Fig. 1 c: schematisch eine bevorzugte Ausgestaltung des Filtertopfes mit Bypasskanal,
- Fig. 2a: schematisch und perspektivisch eine Darstellung einer beispielhaften Ausführungsform eines als Service-Trolley ausgeführten mobilen Milchschaum-Kaffee-Getränkebereiters,
- Fig. 2b: schematisch eine Rückansicht des Service-Trolleys gemäß Fig. 2a mit geöffnetem Aufnahmeraum für die Behälteraufnahme sowie einer schematischen Funktionsskizze betreffend die Zapfeinheit,
- Fig. 2c: eine schematische, beispielhafte Darstellung einer konkreten Ausgestaltungsmöglichkeit eines Flüssigkeitsbehälters,
- Fig. 2d: schematisch und beispielhaft zwei mit unterschiedlichen Funktionseinheiten bestückte Service-Trolleys,
- Fig. 3a: schematisch und beispielhaft eine Ausgestaltungsmöglichkeit eines Milchschaum-Kaffee-Bereitstellungssystems gemäß der vorliegenden Erfindungsidee mit einer im Sinne der Fig. 3b und 3c zusammengeklappten Zentralstation, einer um ein zusätzliches Modul ergänzten Zentralstation sowie mehreren beispielhaft dargestellten Service-Trolleys als mobile Milchschaum-Kaffee-Getränkebereiter,
- Fig. 3b: schematisch und beispielhaft die Zentralstation vor dem Zusammenklappen,
- Fig. 3c: die Zentralstation im zusammengeklappten Zustand entsprechend der Fig. 3a, und
- Fig. 4: schematisch eine beispielhafte Ausführungsform einer Milchschaum-Bereitstellungsvorrichtung.

In der Fig. 1 a ist schematisch und beispielhaft eine Zentralstation einer Milchschaum-Kaffee-Bereitstellungsvorrichtung 1 gezeigt, die durch ein schrankartiges Gehäuse 3 gebildet ist, das mit nachfolgend noch näher beschriebenen Bauteilen bestückt ist.

Diese Zentralstation 2 weist eine hier lediglich schematisch dargestellte Stromanschlussvorrichtung 4 für einen Stromanschluss an ein Stromnetz auf, zum Beispiel an ein Gebäudestromnetz auf. Weiter weist die Zentralstation 2 eine Wasseranschlussvorrichtung 5 für einen Wasseranschluss an eine hier ebenfalls nicht dargestellte Trinkwasserversorgung auf.

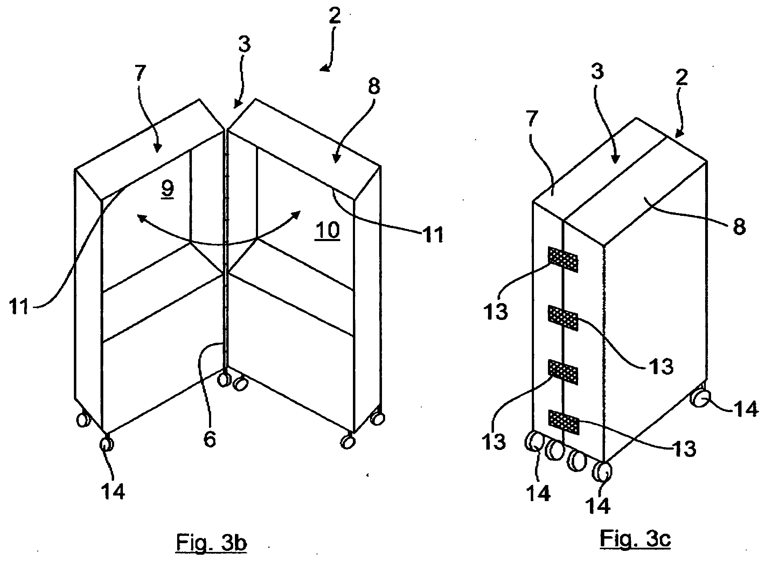

Die durch ein schrankartiges Gehäuse 3 ausgebildete Zentralstation 2 weist zwei mittels einer Scharnierverbindung 6 (siehe auch Figuren 3b und 3c) in der Art eines Reisekoffers klappbar oder schwenkbar verbundene wannenförmige Gehäuseteile 7, 8 mit jeweils einem einen Gehäuseteil-Aufnahmeraum 9, 10 begrenzenden, umlaufenden Gehäuserahmen 11 auf.

Die beiden Gehäuseteile 7, 8 sind so ausgebildet, dass diese, im um die vertikale Scharnierachse 12 der Schamierverbindung 6 aufeinander geklappten Zustand mit ihren jeweiligen Gehäuserahmen 11 aneinander liegen und eine allseitig geschlossene, transportable beziehungsweise verfahrbare, kofferartige Zentralstation 2 ausbilden, in deren Innerem die nachfolgend noch näher beschriebenen Bauteile der Zentralstation 2 sicher aufgenommen sind.

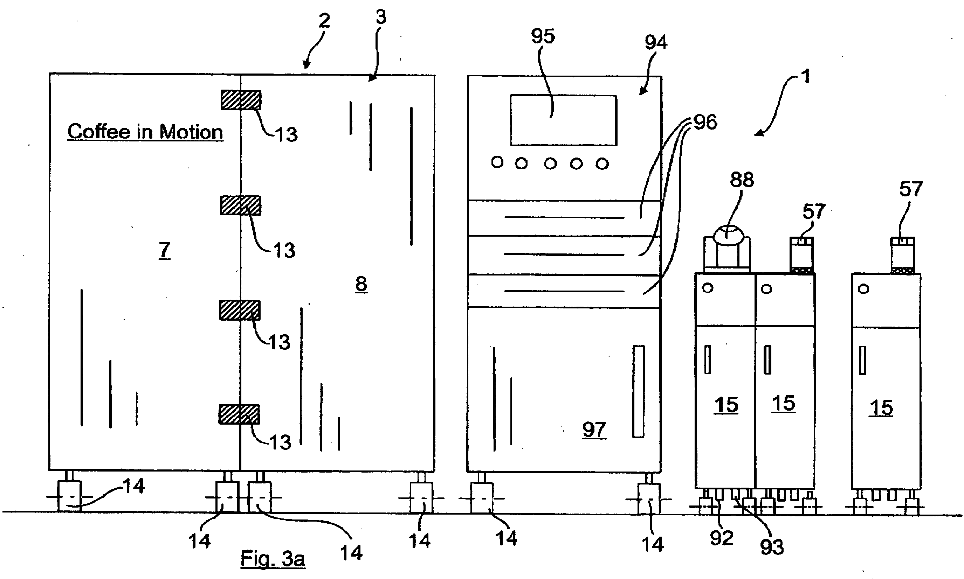

Wie dies weiter insbesondere aus den Figuren 3a und 3c ersichtlich ist, sind die beiden Gehäusteile 7, 8 im aufeinander geklappten Zustand mittels einer Schnellverschlussverbindung 13 miteinander lösbar verbindbar.

Wie dies weiter insbesondere aus der Fig. 1a ersichtlich ist, weisen die beiden Gehäuseteile 7, 8 und damit das Gehäuse 3 der Zentralstation 2 an ihrer bezogen auf die Hochachsenrichtung, Unterseite jeweils Räder auf, die bevorzugt als Nachlaufräder 14 ausgebildet sind.

Mit einem derartigen Aufbau der Zentralstation 2 kann diese einfach und bequem in die Nähe des jeweiligen Einsatzortes verbracht werden und als zentrale Servicestation für die nachfolgend noch näher beschriebenen mobilen Service-Trolleys 15 fungieren.

Wie dies weiter insbesondere der Fig. 1a entnommen werden kann, weist die Zentralstation 2 einen Zentralstation-Kaffeebereiter 16 auf, der mit einer Steuereinrichtung 17 gekoppelt ist, mittels der eine definierte Kaffeemenge zur Abfüllung in einen leeren Kaffeebehälter 18 eines Service-Trolleys 15 in stets gleicher Weise programmgesteuert erzeugt werden kann.

Hierzu weist der Zentralstation-Kaffeebereiter 16 eine mit Kaffeebohnen 19 bestückbare Kaffeemühle 20 auf, mittels der programmgesteuert mit der Steuereinrichtung 17 eine stets gleiche Menge eines frisch gemahlenen Kaffeepulvers (schematisch dargestellt durch den Pfeil 21 in der Fig. 1a) unmittelbar an der Zentralstation 2 erzeugt werden kann, wobei der Kaffeemühle 20 eine Aufnahme- und Abstelleinrichtung 22 für eine mit einem Kaffeefilter 22 (siehe Fig. 1b) bestückten Filtertopf 23 zugeordnet ist. Dadurch kann die genau dosierte Kaffeepulvermenge unmittelbar in den Filtertopf 23 eindosiert werden.

Dieser so mit Kaffeepulver befüllte Filtertopf 23 wird anschließend in eine Topfaufnahme 24 des Zentralstation-Kaffeebereiters 16 eingesetzt. Wie dies der Fig. 1a weiter schematisch entnommen werden kann, ist oberhalb dieser Topaufnahme 24 eine Beregnungsvorrichtung 25, die einen duschkopfartigen Auslass 26 aufweist, so angeordnet, dass der Auslass 26 der Beregnungsvorrichtung 25 unmittelbar oberhalb der Aufnahmeöffnung 27 des in die Topfaufnahme 24 eingesetzten Topfes liegt, was insbesondere auch der Fig. 1c entnommen werden kann.

Wie dies der schematischen Darstellung der Fig. 1 a weiter entnommen werden kann, ist unterhalb der Topfaufnahme 24 eine hier in der linken Bildhälfte lediglich schematisch und strichliert dargestellte Halteeinrichtung 28 für einen Kaffeebehälter 18 des mobilen Service-Trolleys 15 vorgesehen. In diese Halteeinrichtung 28 ist, wie in der Fig. 1 a schematisch dargestellt, ein leerer Kaffeebehälter einsetzbar uns so halterbar, dass das Kaffeeextrakt 29 über einen Topf-Auslass 30 mittelbar oder unmittelbar in den lösbar und austauschbar in der Zentralstation 2 gelagerten, leeren Kaffeebehälter 18 des mobilen Service-Trolleys 15 eingebracht werden kann.

Mittels der hier lediglich äußerst schematisch dargestellten Steuereinrichtung 17 erfolgt die Einfüllung des Kaffeeextraktes in einen leeren Kaffeebehälter 18 dergestalt chip- beziehungsweise programmgesteuert, dass eine stets gleiche Menge eines heißen Wassers mit stets gleicher Temperatur mittels der Beregnungsvorrichtung 25 tropfenweise sowie gepulst beziehungsweise stoßweise in den mit dem gemahlenen Kaffeepulver befüllten Filtertopf 23 eingebracht wird.

Wie dies in der Fig. 1a äußerst schematisch dargestellt ist, weist der Zentralstation-Kaffeebereiter ferner eine Heizeinrichtung 31 auf, die hier lediglich symbolisch und beispielhaft durch eine Heizwendel dargestellt ist und die hier ebenfalls lediglich beispielhaft in einem Heißwasserspeicher 32 angeordnet ist. Mittels der Heizeinrichtung 31 wird das im Heißwasserspeicher 32 aufgenommenen beziehungsweise eingefüllte Wasser auf eine definierte vorgegebene Temperatur aufgeheizt, sodass gesteuert mittels der Steuereinrichtung 17 stets heißes Wasser mit einer genau vorgegebenen Wassertemperatur aus dem Heißwasserspeicher 32 zu vorgegebenen Zeiten abgezogen und der Beregnungsvorrichtung 25 stoßweise beziehungsweise gepulst zugeführt wird. Das Pulsen beziehungsweise die stoßweise Zuführung kann dabei zum Beispiel mittels einer Pumpe oder dergleichen bewerkstelligt werden, was aber hier nicht im Detail dargestellt ist. Der Heißwasserspeicher 32 kann zum Beispiel mit einer Wärmeisolierung 33 versehen sein. Die Lage des Heißwasserspeichers 32 ist hier lediglich aus Gründen der besseren Darstellbarkeit oberhalb der Kaffeemühle 20 dargestellt. Gemäß einer bevorzugten Ausgestaltung kann der Heißwasserspeicher, bezogen auf die Bildebene der Fig. 1a, im Bereich hinter den Behälteraufnahmen 28 bzw. hinter den dort aufgenommenen Kaffeebehältern 18 angeordnet sein.

Alternativ zu der hier lediglich beispielhaft dargestellten Variante kann aber auch eine solche Heizeinrichtung vorgesehen sein, bei der das aus der Frischwasserzufuhr abgezogene Wasser kontinuierlich auf die gewünschte vorgegebene Temperatur erhitzt wird.

Wie dies in der schematischen Darstellung in der Fig. 1a weiter entnommen werden kann, weist der Zentralstation-Kaffeebreiter 16 hier zwei parallele Befüllstationen auf, in denen ein Filtertopf 23 und ein Kaffeebehälter 18 aufgenommen und gehaltert werden können, wobei jeder dieser Befülleinheit jeweils ein separater duschkopfartiger Auslass 26 der Beregnungsvorrichtung 25 zugeordnet ist.

Sowohl die Heizeinrichtung 31 als auch die Kaffeemühle 20 werden dabei bevorzugt elektrisch mit Strom versorgt. Ebenso können Fördereinrichtungen zum Fördern beziehungsweise zum Pumpen von Wasser zur Beregnungsvorrichtung 25 beziehungsweise zum Eindosieren von Wasser in den Heißwasserspeicher 32 elektrisch betrieben sein.

Mittels einer derartigen Ausgestaltung wird somit auf einfache Weise sichergestellt, dass an der Zentralstation 2 eine stets gleiche Menge eines Kaffeepulvers in einen mit einem Kaffeefilter 22 versehenen Filtertopf 23 eingebracht wird und weiter eine stets gleiche Menge an heißem Wasser mit stets gleicher Temperatur mittels der Beregnungsvorrichtung 25 tropfenweise und gepulst beziehungsweise stoßweise in den mit dem gemahlenen Kaffeepulver befüllten Filtertopf 23 eingebracht wird, wodurch die leeren Kaffeebehälter 18 des mobilen Service-Trolleys 15 stets mit Kaffee mit gleichbleibender Qualität beschickt werden können.

Wie dies insbesondere aus der Fig. 1c ersichtlich ist, weist der Filtertopf 23 einen oder mehrere zur Beregnungsvorrichtung 25 hin offene Bypasskanäle 34 auf, über die das von der Beregnungsvorrichtung 25 dem Filtertopf 23 zugeführte Heißwasser zum Teil an dem Kaffeepulver-Aufnahmeraum vorbeigeleitet wird, wobei der wenigstens eine Bypasskanal 34 in den Topf-Auslass 30 einmündet, sodass dort, insbesondere zur Eliminierung von Bitterstoffen, eine Vermischung von Bypasswasser 35 und Roh-Kaffeeextrakt 36 stattfindet und dieses Gemisch als Kaffeeextrakt 29 dem Kaffeebehälter 18 zugeführt wird.

Die Zentralstation 2 weist ferner, hier beispielhaft am rechten Gehäuseteil 8, eine Milcherwärmungseinrichtung 40, zum Beispiel in Form eines Warmhalteofens auf, in dem wie in der Fig. 1a rechts oben dargestellt, hinter einer öffenbaren und schraffiert dargestellten Tür 41 eine vorgegebene Anzahl von in handelsüblichen Verpackungseinheiten oder Gebinden abgefüllte Milch auf eine definierte Temperatur erwärmbar beziehungsweise aufheizbar ist. Die Temperatur kann hier beispielsweise zwischen 30 °C bis 100 °C eingestellt werden, sodass in einem nachfolgend noch näher beschriebenen Milchschaum-Milchbehälter 42 des mobilen Service-Trolleys 15 warme Milch mit zum Beispiel um die 40°C bis 45 °C eingefüllt werden kann, während zum Beispiel in einem nachfolgend noch näher beschriebenen Heißmilchbehälter 43 des Service-Trolleys 15 beispielsweise heiße Milch mit einer Temperatur von 70 °C bis 80 °C eingefüllt werden kann. Die Milcherwärmungseinrichtung 40 ist dabei vorzugsweise stufenlos regulierbar und kann zum Beispiel auch unterschiedliche, voneinander thermisch getrennte Kammern aufweisen, zum Beispiel eine untere Kammer 44 und eine obere Kammer 45, in denen die Temperatur separat geregelt und eingestellt werden kann. Die in der Milcherwärmungseinrichtung 40 beziehungsweise in den unterschiedlichen Kammern 44 beziehungsweise 45 angeordneten handelsüblichen Milchgebinde 46 sind hier lediglich schematisch und beispielhaft strichliert dargestellt.

Dieser Milcherwärmungseinrichtung 40 kann an der Zentralstation 2 eine Befüllstation zugeordnet sein, an der Milch in den jeweiligen Milchbehälter 42, 43 des Service-Trolleys 15 eingefüllt werden kann. In der einfachsten Form ist diese Befüllstation 47 durch das in der Fig. 1 a lediglich äußerst schematisch und beispielhafte dargestellte Spülbecken 48 mit Spülarmatur 49 gebildet, in der die Abfüllung kontrolliert vorgenommen werden kann, in dem zum Beispiel die Milchbehälter im Spülbecken 48 positioniert werden und dort dann die Milch aus dem Gebinde eingefüllt wird. Alternativ dazu kann aber die Milcherwärmungseinrichtung auch mit einer hier nicht dargestellten Zapfstation ausgebildet sein, mittels der erwärmte Milch direkt aus der Milcherwärmungseinrichtung abgezogen und mittelbar oder unmittelbar in den jeweiligen Milchbehälter eingefüllt werden kann. Letzteres kann insbesondere in Verbindung mit heißer Milch vorteilhaft sein, da dann das Hantieren mit heißer Milch im Bereich der Zentralstation 2 sicherer wird.

Wie dies der schematischen Darstellung der Fig. 1a zudem weiter entnommen werden kann, kann die Zentralstation 2 ferner eine Treibmittel-Befüllstation 37 mit einem Druckluftspeicher 38 und einem Schäum- und Treibmittelspeicher 39 aufweisen, an welcher die Kaffeebehälter 18 und die Heißmilchbehälter 43 mit Druckluft und die Milchschaum-Milchbehälter 42 mit bevorzugt Distickstoffmonoxid (N₂o) als Schäum- und Treibmittel befüllt werden können.

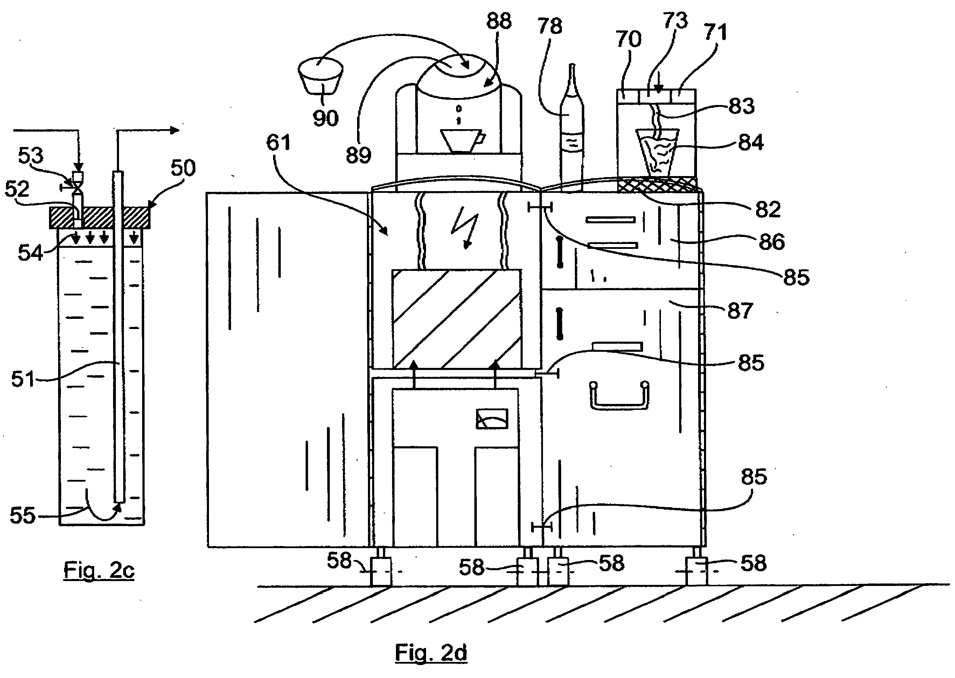

Die mit einem Treibmittel beschickbaren und Kaffee- und/oder Milchbehälter 18, 42, 43 ausbildenden Flüssigkeitsbehälter weisen, wie dies insbesondere in der Fig. 2c schematisch dargestellt ist, eine längliche, und im Wesentlichen zylindrische Form auf. An einer oberen Behälterstirnseite, die hier beispielhaft durch einen abnehmbaren, insbesondere aufschraubbaren Deckel 50 gebildet ist, ist ein in den Behälter bis nahe zum Boden einragendes Steigrohr 51 gehaltert, dass mittelbar oder unmittelbar mit dem jeweils zugeordneten Zapfventil gekoppelt ist, wobei am Deckel 50 ferner ein mit einer Überdrucksicherung, hier in Form einer Berstscheibe 52, versehenes Anschlussventil 53 für das Einbringen des jeweiligen Treibmittels in den Behälter angeordnet ist. Durch das eingebrachte Treibmittel steht die im Behälter aufgenommene Flüssigkeit, wie in der Fig. 2c durch die Pfeile 54 dargestellt unter Druck, wodurch sichergestellt ist, dass die Flüssigkeit, die schwerer als das eingebrachte Treibgas ist, stets mit einem bestimmten Gasdruck entsprechend des Pfeils 55 über das Steigrohr 51 in Richtung zum zugeordneten Zapfventil gepresst wird.

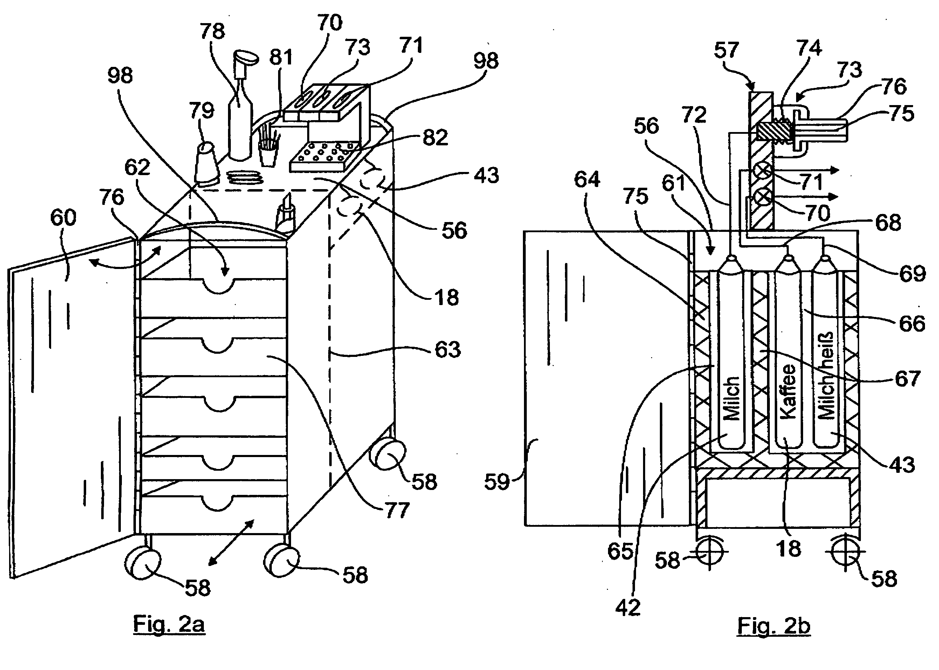

Der insbesondere in der Fig. 2a und 2b in Übersichtsdarstellungen dargestellte und einen mobilen Milchschaum-Kaffee-Getränkebereiter ausbildende Service-Trolley 15 weist eine im Wesentlichen horizontal verlaufende Deckenwand 56 auf, an der eine Zapfeinheit 57 montiert ist, wobei der Service-Trolly 15 eine kastenartige, rechteckblockförmige Außenkontur aufweist und über Räder, insbesondere Nachlaufräder 58 verfahrbar ist. Der Service-Trolly 15 weist an gegenüberliegenden vertikalen Seitenbereichen mittels Türen 59, 60 verschließbare Aufnahmeräume 61, 62 auf, welche Aufnahmeräume 61, 62 durch eine in der Fig. 2a lediglich äußerst schematisch dargestellte Zwischenwand 63 voneinander getrennt sein können.

Der in der Fig. 2b schematisch dargestellte Aufnahmeraum 61 dient der Aufnahme einer aus einem Wärmedämmmaterial hergestellten, blockartigen Behälteraufnahme 64, in der nach oben offene Aufnahmekammern 65, 66 ausgebildet sind, wobei die Aufnahmekammern 65, 66 durch eine Zwischendämmwand 67 voneinander thermisch gedämmt beziehungsweise getrennt sein können. In der einen Aufnahmekammer 66 ist ein mit heißem Kaffee von der Zentralstation 2 befüllter Kaffeebehälter 18 sowie ein mit heißer Milch von der Milcherwärmungseinrichtung 40 befüllter Heißmilchbehälter 43 aufgenommen, die gegebenenfalls ebenfalls in separaten Kammern wärmegedämmt voneinander angeordnet sein können, was aber hier nicht dargestellt ist. Sowohl der Kaffeebehälter 18 als auch der Heißmilchbehälter 43 sind an der Treibmittel-Befüllstation 37 mit Druckluft aus dem Druckluftspeicher 38 befüllt worden und stehen über eine entsprechende Leitungsverbindung 68, 69 jeweils mit einem in der Fig. 2b lediglich äußerst schematisch und beispielhaft dargestellten manuell betätigbaren Zapfventil 70 beziehungsweise 71 in Strömungsverbindung, wobei das Zapfventil 70 ein Kaffee-Zapfventil ausgebildet, während das Zapfventil 71 ein Heißmilch-Zapfventil ausbildet.

In analoger Weise steht der in der Aufnahmekammer 65 aufgenommene Milchschaum-Milchbehälter 42 über eine Leitungsverbindung 72 mit einem Milchschaum-Zapfventil in Strömungsverbindung. Dieses Milchschaum-Zapfventil 73 ist ebenfalls bevorzugt als handbetätigbares Zapfventil ausgebildet. Grundsätzlich kann das Milchschaum-Zapfventil 73 analog zum Kaffee-Zapfventil 70 beziehungsweise Heißmilch-Zapfventil 71 ausgebildet sein. Besonders bevorzugt ist jedoch eine Ausgestaltung, bei der das Milchschaum-Zapfventil 73, wie in der Fig. 2b schematisch dargestellt, als federbelastetes Tellerventil ausgeführt ist, bei dem der Ventilteller 74 einen nach außen abragenden Stift 75 in einer elastischen, endseitig offenen Tülle 76 trägt, wobei durch eine Abstützung und Verbiegung der Tülle 76, zum Beispiel in einer Kaffeetasse und einer damit verbundenen Auslenkung des Stifts 75 der Ventilteller 74 aus der Geschlossenstellung am Ventilsitz in eine Stellung mit einem Öffnungsspalt zum Austritt von Milchschaum verlagert wird. Mit einem solchen Milchschaum-Zapfventil 71 ist einfach und gut dosierbar Milchschaum herzustellen. Grundsätzlich können auch andere Ventilausführungen, zum Beispiel in der Art von Nadelventilen verwendet werden, wobei es für eine effektive Milchschaumerzeugung wesentlich ist, dass enge Durchströmöffnungen freigegeben sind. Der Milchschaum-Milchbehälter 42 ist mit zum Beispiel Distickstoffmonoxid (N₂O) als Schäum-und Treibmittel der Treibmittel-Befüllstation 37 der Zentralstation 2 befüllt, wodurch sichergestellt wird, dass die im Milchschaum-Milchbehälter 42 aufgenommene, bevorzugt auf circa 30 bis 50 °C vorgewärmte Milch nicht nur unter Druck ausgebracht wird, sondern gleichzeitig auch zum Milchschaum aufgeschäumt wird und entsprechend als qualitativ hochwertiger Milchschaum aus dem Milchschaum-Zapfventil 73 austritt. Konkret treibt das Treibmittel, bevorzugt N₂O die Milch mit Hochdruck durch eine Zerstäubereinrichtung (zum Beispiel ein Zerstäuberventil oder eine Zerstäuberdüse), wo die Milch zerstäubt und dann zusammen mit dem Treibmittel im Sinne eines Treib- und Schäummittels den Milchschaum bildet. An dieser Stelle sei nochmals ausdrücklich erwähnt, dass die zuvor beschriebene Milchschaum-Zapfventil-Ausgestaltung rein optional ist und grundsätzlich auch jede andere geeignete Milchschaum-Zapfventil-Ausgestaltung vorgesehen sein kann.

Die Tür 59 ist vorzugsweise über eine Schamierverbindung 75 mit dem Service-Trolly-Gehäuseaufbau schwenkbar verbunden.

An der gegenüberliegenden Seite ist im Aufnahmraum 62 eine Mehrzahl von schubladenartig ausgebildeten Staufächern 77 angeordnet, in denen unterschiedlichste Waren transportiert werden können, zum Beispiel Backwaren, Süßigkeiten, Kaffeezubehör etc. Auch hier ist die Tür 60 mittels einer Scharnierverbindung 76 schwenkbar angelenkt.

Die horizontal verlaufende Deckenwand 56 eignet sich des Weiteren wie in der Fig. 2a schematisch dargestellt zum Abstellen und Bevorraten unterschiedlicher gegebenenfalls benötigter Utensilien, wie zum Beispiel einer Likörflasche 78, von Tassen beziehungsweise Bechern 79, von Zucker in einer Zuckerdose 80 sowie von Löffeln 81, um nur einige Beispiele zu nennen. Wie dies weiter insbesondere aus der Fig. 2a ersichtlich ist, sind die drei Zapfventile 70, 71, 73 in eine designtechnisch formschön gestaltete Zapfeinheit 57 integriert, sodass bei einer Betätigung eines der drei Zapfventile entweder Kaffee, heiße Milch oder Milchschaum ausgegeben wird, wobei die Zapfeinheit weiter eine Abtropfplatte beziehungsweise ein Abtropfsieb 82 aufweist, auf dem, wie dies schematisch in der Fig. 2d dargestellt ist, das zum Beispiel mit Milchschaum 83 befüllbare Trinkgefäß 84 abgestellt werden kann und gegebenenfalls überschwappende Flüssigkeit beziehungsweise von den Zapfventilen abtropfende Flüssigkeiten zuverlässig und sauber für einen optisch hochwertigen Gesamteindruck aufgefangen werden können. Der Service-Trolley 15 weist zudem im Bereich der Deckenwand 56 an gegenüberliegenden Endbereichen Haltegriffe 98 auf.

Wie dies weiter der Fig. 2d entnommen werden kann, können mehrere gleich oder unterschiedlich aufgebaute beziehungsweise bestückte Service-Trolleys mittels einer lösbaren Verbindungseinrichtung 85, die lediglich äußerst schematisch dargestellt ist, miteinander lösbar verbunden sein, sodass mehrere der Service-Trolleys15 mit ihren einander zugeordneten Seitenwänden mehr oder weniger in einer Anlageverbindung aneinander anliegen und gemeinsam miteinander verfahren werden können. Es versteht sich, dass selbstverständlich auch mehr als zwei Service-Trolleys 15 miteinander lösbar verbunden werden können.

Wie in der Fig. 2d weiter gezeigt, können die bevorzugt Haltegriffe aufweisenden Türen, die die Aufnahmeräume verschließen, grundsätzlich auch unterschiedlich ausgebildet sein, so zum Beispiel zweiteilig, wie in Verbindung mit dem rechten Service-Trolley 15 der Bildebene der Fig. 2d gezeigt ist, der eine obere Tür 86 und eine untere Tür 87 aufweist. Auch hier nicht gezeigte Luftlöcher oder Luftschlitze können vorgesehen sein.

Ebenso können die Service-Trolleys 15 grundsätzlich hinsichtlich ihrer Funktionseinheiten, zum Beispiel hinsichtlich der Zapfeinheit 57, gleich oder auch unterschiedlich aufgebaut sein, wie dies in Verbindung mit dem Service-Trolley 15 in der linken Bildhälfte der Fig. 2d beispielhaft gezeigt ist. Dort ist anstelle der Zapfeinheit 57 und damit auch anstelle der Behälteraufnahme 64 mitsamt darin aufgenommenen Behältern eine andere Funktionseinheit vorgesehen, nämlich eine Kapsel-Kaffeemaschine 88 die einen hier nicht im Detail dargestellten befüllbaren Wasserspeicher aufweist, aus dem heraus Wasser abzapfbar ist, wobei das Wasser in einer hier ebenfalls nicht dargestellten Heizeinrichtung erhitzt wird und einer hier lediglich äußerst schematisch dargestellten Kapselaufnahme 89 zugeführt wird. In dieser Kapselaufnahme 89 ist eine, ein Kaffeepulver in vorportionierter Form aufnehmende Kapsel 90 eingesetzt, wobei der Kapselaufnahme das Wasser so zugeführt wird, dass dieses durch die Kapsel 90 und das darin aufgenommene Substrat hindurchgepresst und als Extrakt aus der Kapsel-Kaffeemaschine 88 abgezogen werden kann. Eine derartige Kapsel-Kaffeemaschine 88 eignet sich insbesondere zur schnellen Zubereitung von Espressi. Alternativ könnte anstelle einer Kapsel-Kaffeemaschine auch ein Kaffeevollautomat Verwendung finden.

Wie die zuvor gemachten Ausführungen zeigen, weisen somit die Service-Trolleys 15 einen wesentlichen gleichen Grundaufbau auf, sind jedoch so ausgebildet, dass diese jeweils mit unterschiedlichen oder gleichen Funktionseinheiten bestückt werden können.

Wie dies der Fig. 2d, linke Bildhälfte, weiter zu entnehmen ist, ist im Aufnahmeraum 61 nunmehr anstelle der Behälteraufnahme 64 eine Batterieeinheit 91 aufgenommen, die zur Energleversorgung mit der Kapsel-Kaffeemaschine 88 gekoppelt ist.

Im unteren Bereich des Aufnahmeraums 61 sind hier zum Beispiel entsprechende Steuereinrichtungen für die Kapsel-Kaffeemaschine 88 angeordnet, was hier jedoch äußerst schematisch und beispielhaft dargestellt ist.

Wie zuvor ausgeführt, können grundsätzlich auch zwei gleiche, das heißt mit gleichen Funktionseinheiten bestückte Service-Trolleys 15 miteinander lösbar verbunden werden.

Wie weiter aus der Fig. 3a rechte Bildhälfte ersichtlich, können die Service-Trolleys 15 ferner auch mit Pedalen 92, 93 versehen sein, die zum einen (Pedal 92) zur Arretierung der Verfahrbarkeit und damit als Bremse für die Nachlaufräder 58 der Service-Trolleys 58 dienen, während das Pedal 93 diese Arretierung lösen kann.

Der Darstellung in der Fig. 3 a linke Bildhälfte kann zudem entnommen werden, dass hier die Zentralstation 2 als zusammengeklappte, einfach und gut transportierbare kofferartige Einheit ausgebildet ist. Im mittleren Bereich der Fig. 3a ist ferner noch ein weiteres Ergänzungsmodul 94 für die Zentralstation dargestellt, das ebenfalls verfahrbar ausgebildet ist und das zum Beispiel einen Backofen 95 beziehungsweise eine Mikrowelle aufweisen kann, in dem beziehungsweise in denen zum Beispiel Backwaren aufgebacken werden können. Zusätzlich können Staufächer 96, 97 vorgesehen sein. Weiter kann auch eine Kühleinheit, zum Beispiel ein Kühlschrank, gegebenenfalls mit Gefrierfach, vorzugsweise jeweils als separate Ergänzungsmodule vorgesehen sein. Bevorzugt weisen diese Einzelmodule eine im wesentlichen gleiche Höhe und/oder Breite und/oder Tiefe auf, so dass diese gut als Gesamtsystem zu erkennen sind.

Je nach den in Verbindung mit den mobilen Service-Trolleys 15 zur Verfügung zu stellenden Produkten kann somit die Zentralstation 3 in beliebiger Weise mit separaten Ergänzungsmodulen 94 ergänzt werden, sodass sichergestellt ist, dass die Baristi mit ihren Service-Trolleys 15 stets in ausreichender Weise mit den gewünschten anzubietenden Produkten versorgt sind beziehungsweise diese auch jederzeit nachrüsten können.

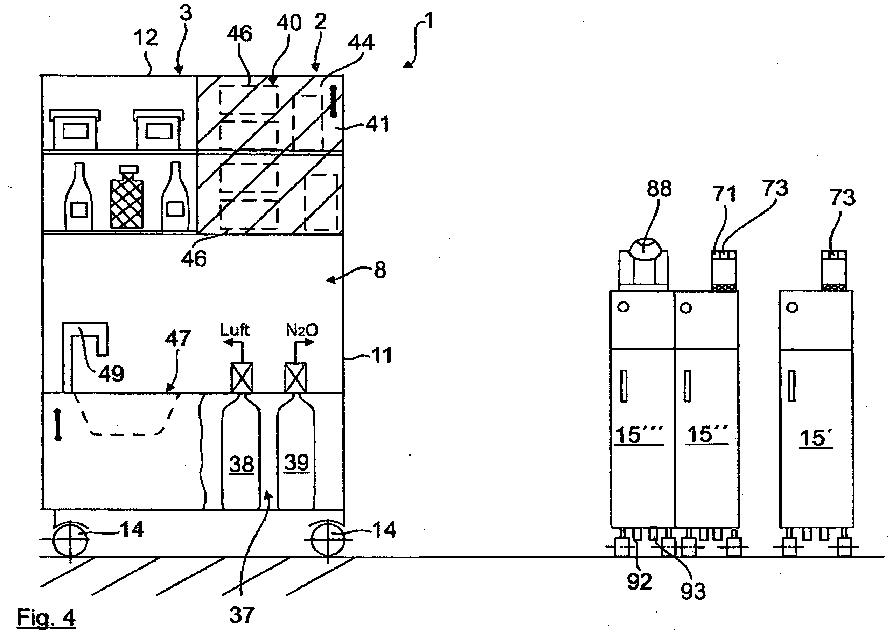

Eine beispielhafte Ausführungsform für eine erfindungsgemäße Milchschaum-Bereitstellungsvorrichtung verwendet beispielsweise nur die in der Fig. 1 a dargestellte rechte Hälfte und damit nur das Gehäuseteil 8 der Zentralstation 2, die die Treibmittel-Befüllstation 37 und die Milcherwärmungseinrichtung 40 aufweist. Das heißt mit anderen Worten, dass hier das linke Gehäuseteil 7 mit dem Zentralstation-Kaffeebereiter 16 nicht vorhanden ist. In diesem Fall ist dann zum Beispiel ein Stromanschluss beziehungsweise ein Wasseranschluss direkt an das rechte Gehäuseteil 8 an entsprechende Stromanschluss-vorrichtungen beziehungsweise Wasseranschlussvorrichtungen herangeführt. Dies ist in der Fig. 4 schematisch in der linken Bildhälfte dargestellt.

Dieser Zentralstation, die lediglich durch das rechte Gehäuseteil 8 der Zentralstation 2 der Fig. 1 a gebildet ist, kann zum Beispiel ein Service-Trolley 15' (rechte Bildhälfte der Fig. 4) zugeordnet sein, der hinsichtlich der Aufnahmeräume im Wesentlichen gleich ausgebildet ist, der jedoch keine Aufnahmekammern für Kaffeebehälter 18 und Heißmilchbehälter 43 aufweist, sondern nur eine oder mehrere Aufnahmekammern für Milchschaum-Milchbehälter 42. Dementsprechend weist die dem einen oder mehreren Milchschaum-Milchbehältern zugeordnete Zapfeinheit auch nur ein oder gegebenenfalls mehrere Milchschaum-Zapfventile 73 auf. Ansonsten kann der Aufbau wie zuvor dargestellt, demjenigen der Service-Trolleys 15 der Milchschaum-Kaffee-Bereitstellungsvorrichtung 1 entsprechen. Diesem Trolley 15' könnte zum Beispiel ein mit einer Kaffeemaschine 88 bestückter Trolley, wie vorstehend beschrieben zugeordnet sein, was aber hier nicht dargestellt ist.

Darüber hinaus kann ein Service-Trolley 15" aber grundsätzlich auch mit einem Milchschaum-Milchbehälter und mit einem weiteren Milchbehälter, zum Beispiel einem Heißmilch-Milchbehälter, bestückt sein, denen eine Milchschaum-Zapfventil 73 bzw. ein Heißmilch-Zapfventil 71 an der Zapfeinheit entsprechend zugeordnet ist. Mit einem derartigen Trolley 15" kann somit neben Milchschaum auch Milch, zum Beispiel Heißmilch, ausgegeben werden, was zum Beispiel insbesondere dann vorteilhaft ist, wenn dieser Trolley 15" mit einem mit einer Kaffeemaschine 88 bestückten Trolley 15"' kombiniert bzw. gekoppelt ist, wie dies im mittleren Bereich der Fig. 4 beispielhaft und schematisch gezeigt ist.

Mit der erfindungsgemäßen Lösung können somit die drei nachstehend genannten besonders bevorzugten Einheiten zur Verfügung gestellt werden:

Der mobile Milchschaum-Bereiter kann grundsätzlich als Single-Unit mit nur einem Milchschaummodul ausgebildet sein und zum Beispiel mit einem anderen Kaffeesystem eingesetzt werden oder ergänzend zu einem mit einer Kaffeemaschine, insbesondere mit einer Kapsel-Kaffeemaschine oder einem Kaffeevollautomaten, bestückten Service-Trolley eingesetzt werden.

Weiter kann der mobile Milchschaum-Bereiter als Double-Unit mit einem Milchschaummodul sowie mit einem Milchmodul für Helßmilch ausgebildet sein. Diese Double-Unit kann ebenfalls wiederum mit einem anderen Kaffeesystem eingesetzt werden oder ergänzend zu einem mit einer Kaffeemaschine, insbesondere mit einer Kapsel-Kaffeemaschine oder einem Kaffeevollautomaten, bestückten Service-Trolley eingesetzt werden.

Und schließlich kann der mobile Milchschaum-Bereiter als Triple-Unit mit einem Milchschaummodul, mit einem Milchmodul für Heißmilch und mit einem Kaffeemodul ausgebildet sein. Auch diese Triple-Unit kann ebenfalls wiederum mit einem anderen Kaffeesystem eingesetzt werden oder ergänzend zu einem mit einer Kaffeemaschine, insbesondere mit einer Kapsel-Kaffeemaschine oder einem Kaffeevollautomaten, bestückten Service-Trolley eingesetzt werden, wie vorstehend beschrieben.

An dieser Stelle wird ausdrücklich darauf hingewiesen, dass selbstverständlich bei sämtlichen vorstehend beschriebenen Ausführungsformen anstelle oder zusätzlich zu der Möglichkeit der Bereitstellung von heißer Milch in einem Heißmilch-Milchbehälter auch kalte bzw. lauwarme (zimmerwarme) Milch in analoger Weise in einem Milchbehälter aufgenommen und in dem jeweiligen mobilen Bereiter (zum Beispiel einem Service-Trolley) vorgehalten werden kann. Diese kalte bzw. zimmerwarme Milch kann zum Beispiel ohne vorherige Erwärmung an der Zentralstation vorgehalten werden, zum Beispiel in handelsüblichen Behältnissen und Gebinden, und dann dort in die Milchbehälter eingefüllt werden.

## Patentansprüche

1. Milchschaum-Kaffee-Bereitstellungsvorrichtung,
mit einem Milchschaum-Kaffee-Getränkebereiter (15), der von einer bereiterexternen Energiezuführung unabhängig und mobil ausgeführt ist,
wobei der mobile Milchschaum-Kaffee-Getränkebereiter (15) eine Behälteraufnahme (64) für wenigstens einen Kaffeebehälter (18) und für wenigstens einen, Milch zur Zubereitung von Milchschaum aufweisenden Milchschaum-Milchbehälter (42) aufweist, die jeweils durch wechselbare und nachfüllbare Flüssigkeitsbehälter gebildet sind,
wobei der mobile Milchschaum-Kaffee-Getränkebereiter (15) wenigstens ein, vorzugsweise manuell betätigbares Kaffee-Zapfventil (70), das dem wenigstens einen Kaffeebehälter (18) zugeordnet ist, und wenigstens ein, vorzugsweise manuell betätigbares Milchschaum-Zapfventil (73) aufweist, das dem Milchschaum-Milchbehälter zugeordnet ist, wobei dem Milchschaum-Milchbehälter (42) ferner ein Treibmittel, bevorzugt ein Schäum- und Treibmittel, höchst bevorzugt Distickstoffmonoxid (N₂O) als Schäum- und Treibmittel, zugeordnet ist und wobei bei einer Betätigung des Milchschaum-Zapfventils (73) Milchschaum, insbesondere zur Bereitung eines Milchschaum-Kaffee-Getränkes, austritt,
**dadurch gekennzeichnet,**
**dass** die Milchschaum-Kaffee-Bereitstellungsvorrichtung (1) weiter eine von dem mobilen Milchschaum-Kaffee-Getränkebereiter (15) unabhängige Zentralstation (2) mit einem Zentralstation-Kaffeebereiter (16) aufweist, der mit einer Steuereinrichtung (17) gekoppelt ist, mittels der eine definierte Kaffeemenge zur Abfüllung in einen leeren Kaffeebehälter (18) des mobilen Milchschaum-Kaffee-Getränkebereiters (15) dergestalt programmgesteuert erzeugbar ist,
- **dass** an der Zentralstation (2) eine definierte Menge eines Kaffeepulvers (21) in einen, vorzugsweise mit einem Kaffeefilter (22) versehenen Topf (23) als weiteren Bestandteil des Zentralstation-Kaffeebereiters (16) eingebracht wird, und
- **dass** an der Zentralstation (2) eine definierte Menge an heißem Wasser mit definierter Temperatur mittels einer Beregnungsvorrichtung (25) als weiteren Bestandteil des Zentralstation-Kaffeebereiters (16) in den mit dem gemahlenen Kaffeepulver (21) befüllten Topf (23) eingebracht wird,
**dass** der Topf (23) einen Topf-Auslass (30) aufweist, über den das Kaffeeextrakt (29) mittelbar oder unmittelbar in den lösbar und austauschbar in der Zentralstation (2) gelagerten, leeren Kaffeebehälter (18) des mobilen Milchschaum-Kaffee-Getränkebereiters (15) einbringbar ist.

2. Milchschaum-Kaffee-Bereitstellungsvorrichtung nach Anspruch 1, **dadurch gekennzeichnet, dass** mittels der Steuereinrichtung (17) eine definierte Kaffeemenge zur Abfüllung in einen leeren Kaffeebehälter (18) des Milchschaum-Kaffee-Getränkebereiters (15) dergestalt programmgesteuert erzeugbar ist,
- dass an der Zentralstation (2) eine stets gleiche Menge eines Kaffeepulvers (21) in einen, vorzugsweise mit einem Kaffeefilter (22) versehenen Topf (23) als weiteren Bestandteil des Zentralstation-Kaffeebereiters (16) eingebracht wird, und
- dass an der Zentralstation (2) eine stets gleiche Menge an heißem Wasser mit stets gleicher Temperatur mittels einer Beregnungsvorrichtung (25) als weiteren Bestandteil des Zentralstation-Kaffeebereiters (16) tropfenweise und/oder gepulst und/oder stoßweise in den mit dem gemahlenen Kaffeepulver (21) befüllten Topf (23) eingebracht wird.

3. Milchschaum-Kaffee-Bereitstellungsvorrichtung nach Anspruch 1 oder 2,
**dadurch gekennzeichnet, dass** die Zentralstation ferner eine Treibmittel-Befüllstation (37) mit wenigstens einem Treibmittelspeicher, vorzugsweise mit einem Druckluftspeicher (38) für den Kaffeebehälter und/oder mit einem Schäum- und Treibmittelspeicher (39) für den Milchschaum-Milchbehälter (42), aufweist, an welcher Treibmittel-Befüllstation (37) der wenigstens eine mit Kaffee befüllte Kaffeebehälter (18) mit einem Treibmittel, vorzugsweise mit Druckluft, befüllbar ist, so dass der mobile Milchschaum-Kaffee-Getränkebereiter (15) mit einem Kaffeebehälter (18) bestückbar ist, aus dem der Kaffee bei einer Betätigung des Kaffee-Zapfventils (70) mit einem definierten Druck austritt, und/oder an der der wenigstens eine mit Milch zum Erzeugen von Milchschaum befüllte Milchschaum-Milchbehälter (42) des Milchschaum-Kaffee-Getränkebereiters (15) mit einem Treibmittel, vorzugsweise mit Distickstoffmonoxid (N₂O) als Schäum- und Treibmittel, befüllbar ist.

4. Milchschaum-Kaffee-Bereitstellungsvorrichtung nach einem der vorhergehenden Ansprüche, **dadurch gekennzeichnet, dass** der Zentralstation-Kaffeebereiter (16) und damit die Zentralstation (2) ferner eine mit Kaffeebohnen (19) bestückbare Kaffeemühle (20) aufweist, mittels der programmgesteuert mit der Steuereinrichtung (17) eine definierte, vorzugsweise stets gleiche Menge eines frisch gemahlenen Kaffeepulvers (21) unmittelbar an der Zentralstation (2) erzeugbar ist, wobei bevorzugt vorgesehen ist, dass der Kaffeemühle (20) eine Aufnahme- und/oder Abstelleinrichtung (22) für den vorzugsweise mit einem Filter (22) bestückten Topf (23) zugeordnet ist.

5. Milchschaum-Kaffee-Bereitstellungsvorrichtung nach einem der vorhergehenden Ansprüche, **dadurch gekennzeichnet, dass** der Zentralstation-Kaffeebereiter (16) eine Heizeinrichtung (31) aufweist, der Wasser zuführbar ist und mittels der und/oder in der das Wasser programmgesteuert mittels der Steuereinrichtung (17) auf die gewünschte Temperatur erhitzbar ist, wobei bevorzugt vorgesehen ist, dass der Heizeinrichtung (31) ein Heißwasserspeicher (32) zugeordnet oder in diese integriert ist, aus dem programmgesteuert mittels der Steuereinrichtung (17) zu vorgegebenen Zeiten eine vorgegebene Wassermenge abziehbar und der Beregnungsvorrichtung (25, vorzugsweise stoßweise oder gepulst, zuführbar ist.

6. Milchschaum-Kaffee-Bereitstellungsvorrichtung nach einem der vorhergehenden Ansprüche, **dadurch gekennzeichnet, dass** der Topf wenigstens einen zur Beregnungsvorrichtung (25) hin offenen Bypasskanal (34) aufweist, über den das von der Beregnungsvorrichtung (25) dem Topf (23) zugeführte Heißwasser zum Teil an dem Kaffeepulveraufnahmeraum vorbeigeleitet wird, wobei der wenigstens eine Bypasskanal (34) in den Topf-Auslass (30) einmündet, so dass dort, insbesondere zur Eliminierung von Bitterstoffen, eine Vermischung von Bypasswasser (35) und Roh-Kaffeeextrakt (36) stattfindet und dieses Gemisch als Kaffeeextrakt (29) dem Kaffeebehälter (18) zugeführt wird.

7. Milchschaum-Kaffee-Bereitstellungsvorrichtung nach einem der vorhergehenden Ansprüche, **dadurch gekennzeichnet, dass** der Zentralstation-Kaffeebereiter (16) wenigstens eine Topfaufnahme (24) aufweist, in die ein vorzugsweise mit einem Filter (22) bestückter und mit einer definierten Menge gemahlenen Kaffeepulvers (21) beschickter Topf (23) lösbar einsetzbar ist,
dass oberhalb dieser Topfaufnahme (24), die Beregnungsvorrichtung (25), vorzugsweise eine pro Topfaufnahme (24) einen duschkopfartigen Auslass (26) aufweisende Beregnungsvorrichtung (25), so angeordnet ist, dass der Auslass (26) der Beregnungsvorrichtung (25) unmittelbar oberhalb der Aufnahmeöffnung (27) des in die Topfaufnahme (24) eingesetzten Topfes (23) angeordnet ist, und
dass unterhalb der Topfaufnahme (24) eine Halteeinrichtung (28) für einen Kaffeebehälter (18) des mobilen Milchschaum-Kaffee-Getränkebereiters (15) angeordnet ist.

8. Milchschaum-Kaffee-Bereitstellungsvorrichtung nach einem der vorhergehenden Ansprüche, **dadurch gekennzeichnet, dass** die Zentralstation (2) ferner wenigstens eine Milcherwärmungseinrichtung (40) aufweist, mittels der Milch, insbesondere in handelsüblichen Verpackungseinheiten oder Gebinden (46) abgefüllte Milch, auf eine definierte Temperatur, insbesondere auf eine Temperatur von 30°C bis 100°C, erwärmbar ist, wobei bevorzugt vorgesehen ist, dass der Milcherwärmungseinrichtung (40) an der Zentralstation (2) eine Befüllstation (47) und/oder eine Zapfstation zugeordnet ist, an der und/oder mittels der erwärmte Milch in einen Milchbehälter des Milchschaum-Kaffee-Getränkebereiters (15) einfüllbar ist.

9. Milchschaum-Kaffee-Bereitstellungsvorrichtung nach einem der vorhergehenden Ansprüche, **dadurch gekennzeichnet, dass** der mobile Milchschaum-Kaffee-Getränkebereiter (15) Aufnahmen für zwei unterschiedliche Arten von Milchbehältern (42, 43) aufweist, von denen die eine Art als Milchschaum-Milchbehälter (42) mit Milch vorgegebener Temperatur, insbesondere von 30°C bis 50°C, zur Zubereitung des Milchschaums und die andere Art als Heißmilch-Milchbehälter (43) mit demgegenüber wärmerer Milch, insbesondere mit einer Temperatur von 75°C bis 90°C, zur Bereitstellung von heißer Milch befüllt ist, wobei dem Milchschaum-Milchbehälter (42) das Milchschaum-Zapfventil (73) und dem Heißmilch-Milchbehälter (43) ein Heißmilch-Zapfventil (71) zugeordnet ist, und
dass der Heißmilch-Milchbehälter (43) mit einem Treibmittel, vorzugsweise mit Druckluft, einer Treibmittel-Befüllstation (37) der Zentralstation (2) befüllt ist, so dass bei einer Betätigung des Heißmilch-Zapfventils (71) heiße, flüssige Milch mit einem definierten Druck austritt.

10. Milchschaum-Kaffee-Bereitstellungsvorrichtung nach einem der vorhergehenden Ansprüche, **dadurch gekennzeichnet, dass** die Zentralstation (2) durch ein schrankartiges Gehäuse (3) gebildet ist, das mit den Bauteilen der Zentralstation (2) bestückt ist, wobei bevorzugt vorgesehen ist, dass die Zentralstation (2) als verfahrbare und/oder transportable Einheit ausgebildet ist und/oder
dass die Zentralstation (2) eine Stromanschlussvorrichtung (4) für einen Stromanschluss an ein Stromnetz aufweist und/oder dass die Zentralstation (2) eine Wasseranschlussvorrichtung (5) für einen Wasseranschluss an eine Trinkwasserversorgung aufweist.

11. Milchschaum-Kaffee-Bereitstellungsvorrichtung nach Anspruch 10, **dadurch gekennzeichnet, dass** die durch ein schrankartiges Gehäuse (3) ausgebildete Zentralstation (2) in der Mitte geteilt ist und zwei mittels einer Gelenk- und/oder Scharnierverbindung (6) mit vertikaler Gelenk- und/oder Scharnierachse (12) miteinander klappbar oder schwenkbar verbundene, einen Aufnahmeraum (9, 10) ausbildende Gehäuseteile (7, 8) aufweist, die jeweils mit Bauteilen der Zentralstation (2) bestückt sind, wobei die beiden Gehäuseteile (7, 8) im um die vertikale Gelenk- und/oder Scharnierachse (12) aufeinandergeklappten Zustand eine wenigstens bereichsweise geschlossene, transportable und/oder verfahrbare Zentralstation (2) ausbilden, wobei bevorzugt vorgesehen ist, dass die beiden Gehäuseteile (7, 8) mittels einer Schnellverschlussverbindung (13) miteinander lösbar verbindbar und/oder an ihrer Unterseite Räder (14) aufweisen.

12. Milchschaum-Kaffee-Bereitstellungsvorrichtung nach einem der vorhergehenden Ansprüche, **dadurch gekennzeichnet, dass** die Behälteraufnahme (64) des mobilen Milchschaum-Kaffee-Getränkebereiters (15) blockartig aus einem Wärmedämmmaterial hergestellt ist, in dem nach oben offene Aufnahmekammern (65, 66) zur Aufnahme der Flüssigkeitsbehälter ausgebildet sind, wobei bevorzugt vorgesehen ist, dass die einzelnen Flüssigkeitsbehälter wenigstens zum Teil durch Zwischenwände (67) voneinander thermisch gedämmt oder getrennt angeordnet sind.

13. Milchschaum-Kaffee-Bereitstellungsvorrichtung, nach einem der vorhergehenden Ansprüche, **dadurch gekennzeichnet, dass** der mobile Milchschaum-Kaffee-Getränkebereiter als fahrbarer Service-Trolley (15) ausgebildet ist, der einen vorzugsweise mittels einer Abdeckung (59) verschließbaren Aufnahmeraum (61) für die Behälteraufnahme (64) aufweist, wobei eine die Zapfventile (70, 71, 73) aufweisende Zapfeinheit (57) trolleyaußenseitig angeordnet ist, wobei bevorzugt vorgesehen ist, dass mehrere Service-Trolleys (15) ein Set von mit gleichen und/oder unterschiedlichen Funktionseinheiten bestückten Service-Trolleys (15) ausbilden und/oder dass die Service-Trolleys (15) so ausgebildet sind, dass diese miteinander lösbar verbindbar und damit gemeinsam verfahrbar sind.

14. Milchschaum-Kaffee-Bereitstellungsvorrichtung nach einem der vorhergehenden Ansprüche, **dadurch gekennzeichnet, dass** die mit einem Treibmittel beschickbaren und Kaffee- und/oder Milchbehälter (18, 42, 43) ausbildenden Flüssigkeitsbehälter eine längliche und/oder im Wesentlichen zylindrische Form aufweisen, wobei an einer, bezogen auf den in der Behälteraufnahme (64) aufgenommenen Zustand, oberen Behälterstirnseite, die vorzugsweise durch einen abnehmbaren, insbesondere aufschraubbaren Deckel (50) gebildet ist, ein in den Behälter einragendes Steigrohr (51), das einen definierten Abstand, insbesondere Spaltabstand zum Bodenbereich aufweist, gehaltert ist, das mittelbar oder unmittelbar mit dem jeweils zugeordneten Zapfventil (70, 71, 73) gekoppelt ist, wobei bevorzugt vorgesehen ist, dass am Flüssigkeitsbehälter, insbesondere an der oberen Behälterstirnseite, ein mit einer Überdrucksicherung (52), insbesondere einer Berstscheibe, versehenes Anschlussventil (53) für das Einbringen des jeweiligen Treibmittels in den Flüssigkeitsbehälter angeordnet ist.

15. Verfahren zur Zubereitung von Milchschaum-Kaffee mittels einer Milchschaum-Kaffee-Bereitstellungsvorrichtung nach einem der Ansprüche 1 bis 14.

## Claims

1. Cappuccino making apparatus,
comprising a cappuccino beverage maker (15) which is designed to be independent of an external power supply and mobile,
wherein the mobile cappuccino beverage maker (15) has a container receptacle (64) for at least one coffee container (18) and for at least one milk foam milk container (42) which contains milk for preparing milk foam, which containers are each formed by liquid containers which can be replaced and replenished,
wherein the mobile cappuccino beverage maker (15) has at least one, preferably manually operable, coffee tap valve (70), which is associated with the at least one coffee container (18), and at least one, preferably manually operable, milk foam tap valve (73), which is associated with the milk foam milk container, wherein a propellant, preferably a foaming agent and propellant, extremely preferably nitrous oxide (N₂O) as the foaming agent and propellant, is further associated with the milk foam milk container (42), and wherein milk foam, in particular for preparing a cappuccino beverage, is discharged when the milk foam tap valve (73) is operated,
**characterized**
**in that** the cappuccino making apparatus (1) further has a central station (2) which is independent of the mobile cappuccino beverage maker (15) and has a central station coffee maker (16) which is coupled to a control device (17) by means of which a defined quantity of coffee for filling an empty coffee container (18) of the mobile cappuccino beverage maker (15) can be generated in a program-controlled manner in such a way
- that a defined quantity of a coffee powder (21) is introduced into a pot (23), which is preferably provided with a coffee filter (22), as a further constituent part of the central station coffee maker (16) at the central station (2), and
- that a defined quantity of hot water with a defined temperature is introduced into the pot (23), which is filled with the ground coffee powder (21), by means of a sprinkling apparatus (25) as a further constituent part of the central station coffee maker (16) at the central station (2),
**in that** the pot (23) has a pot outlet (30) by means of which the coffee extract (29) can be introduced indirectly or directly into the detachable and replaceable empty coffee container (18), which is mounted in the central station (2), of the mobile cappuccino beverage maker (15).

2. Cappuccino making apparatus according to Claim 1, **characterized in that** a defined quantity of coffee for filling an empty coffee container (18) of the cappuccino beverage maker (15) can be generated in a program-controlled manner by means of the control device (17) in such a way
- that a quantity of a coffee powder (21), which quantity is always the same, is introduced into a pot (23), which is preferably provided with a coffee filter (22), as a further constituent part of the central station coffee maker (16) at the central station (2), and
- that a quantity of hot water, which quantity is always the same, with a temperature which is always the same is introduced into the pot (23), which is filled with the ground coffee powder (21), in drops and/or in a pulsed manner and/or intermittently by means of a sprinkling apparatus (25) as a further constituent part of the central station coffee maker (16) at the central station (2).

3. Cappuccino making apparatus according to Claim 1 or 2, **characterized in that** the central station further has a propellant filling station (37) with at least one propellant storage means, preferably with a compressed-air storage means (38) for the coffee container and/or with a foaming agent and propellant storage means (39) for the milk foam milk container (42), at which propellant filling station (37) the at least one coffee container (18) which is filled with coffee can be filled with a propellant, preferably with compressed air, so that the mobile cappuccino beverage maker (15) can be fitted with a coffee container (18) from which the coffee is discharged at a defined pressure when the coffee tap valve (70) is operated, and/or at which the at least one milk foam milk container (42) of the cappuccino beverage maker (15), which milk foam milk container is filled with milk for producing milk foam, can be filled with a propellant, preferably with nitrous oxide (N₂O) as foaming agent and propellant.

4. Cappuccino making apparatus according to one of the preceding claims, **characterized in that** the central station coffee maker (16), and therefore the central station (2), further has a coffee grinder (20) which can be loaded with coffee beans (19) and by means of which a defined quantity, which is preferably always the same, of a freshly ground coffee powder (21) can be generated directly at the central station (2) in a manner program-controlled by the control device (17), wherein it is preferably provided that a receiving and/or positioning device (22) for the pot (23) which is preferably fitted with a filter (22) is associated with the coffee grinder (20).

5. Cappuccino making apparatus according to one of the preceding claims, **characterized in that** the central station coffee maker (16) has a heating device (31) to which water can be supplied and by means of which and/or in which the water can be heated to the desired temperature in a manner program-controlled by means of the control device (17), wherein it is preferably provided that a hot water storage means (32) is associated with the heating device (31) or is integrated into the said heating device, it being possible for a prespecified quantity of water to be drawn from the said hot water storage means at prespecified times in a manner program-controlled by means of the control device (17) and to be supplied to the sprinkling apparatus (25), preferably intermittently or in a pulsed manner.

6. Cappuccino making apparatus according to one of the preceding claims, **characterized in that** the pot has at least one bypass channel (34) which is open in the direction of the sprinkling apparatus (25) and by means of which some of the hot water which is supplied to the pot (23) by the sprinkling apparatus (25) is routed past the coffee powder receiving area, wherein the at least one bypass channel (34) opens into the pot outlet (30), so that bypass water (35) and raw coffee extract (36) are mixed there, in particular for the purpose of eliminating bitter substances, and this mixture is supplied to the coffee container (18) as coffee extract (29).

7. Cappuccino making apparatus according to one of the preceding claims, **characterized in that** the central station coffee maker (16) has at least one pot receptacle (24) into which a pot (23) which is preferably fitted with a filter (22) and is charged with a defined quantity of ground coffee powder (21) can be detachably inserted,
**in that**, above this pot receptacle (24), the sprinkling apparatus (25), preferably a sprinkling apparatus (25) which has a shower head-like outlet (26) for each pot receptacle (24), is arranged such that the outlet (26) of the sprinkling apparatus (25) is arranged directly above the receiving opening (27) of the pot (23) which is inserted into the pot receptacle (24), and
**in that** a holding device (28) for a coffee container (18) of the mobile cappuccino beverage maker (15) is arranged beneath the pot receptacle (24).

8. Cappuccino making apparatus according to one of the preceding claims, **characterized in that** the central station (2) further has at least one milk heating device (40) by means of which milk, in particular milk which is filled into commercially available packaging units or packets (46), can be heated to a defined temperature, in particular to a temperature of from 30°C to 100°C, wherein it is provided that a filling station (47) and/or a tap station are/is associated with the milk heating device (40) at the central station (2), it being possible for a milk container of the cappuccino beverage maker (15) to be filled with heated milk at and/or by means of the filling station and/or tap station.

9. Cappuccino making apparatus according to one of the preceding claims, **characterized in that** the mobile cappuccino beverage maker (15) has receptacles for two different types of milk containers (42, 43), of which one type, as a milk foam milk container (42), is filled with milk of a prespecified temperature, in particular of from 30°C to 50°C, for preparing the milk foam, and the other type, as a hot milk milk container (43), is filled with warmer milk, in particular with a temperature of from 75°C to 90°C, for providing hot milk, wherein the milk foam tap valve (73) is associated with the milk foam milk container (42), and a hot milk tap valve (71) is associated with the hot milk milk container (43), and
**in that** the hot milk milk container (43) is filled with a propellant, preferably with compressed air, of a propellant filling station (37) of the central station (2), so that hot, liquid milk with a defined pressure is discharged when the hot milk tap valve (71) is operated.

10. Cappuccino making apparatus according to one of the preceding claims, **characterized in that** the central station (2) is formed by a cabinet-like housing (3) which is fitted with the components of the central station (2), wherein it is preferably provided that the central station (2) is designed as a movable and/or transportable unit, and/or
**in that** the central station (2) has a power connection apparatus (4) for a power connection to a power supply system, and/or **in that** the central station (2) has a water connection apparatus (5) for a water connection to a drinking water supply means.

11. Cappuccino making apparatus according to Claim 10, **characterized in that** the central station (2) which is formed by a cabinet-like housing (3) is split in the middle and has two housing parts (7, 8) which are connected to one another in a foldable manner or pivotable manner by means of a joint and/or hinge connection (6) with a vertical joint and/or hinge axis (12) and form a receiving area (9, 10) and are each fitted with components of the central station (2), wherein the two housing parts (7, 8), in the state in which they are folded together about the vertical joint and/or hinge axis (12), form a transportable and/or movable central station (2) which is closed at least in regions, wherein it is preferably provided that the two housing parts (7, 8) can be detachably connected to one another by means of a quick-action closure connection (13) and/or have wheels (14) on the bottom face.

12. Cappuccino making apparatus according to one of the preceding claims, **characterized in that** the container receptacle (64) of the mobile cappuccino beverage maker (15) is produced in a block-like manner from a thermally insulating material in which receiving chambers (65, 66) which are open at the top are formed for receiving the liquid containers, wherein it is preferably provided that the individual liquid containers are arranged such that they are thermally insulated or separated from one another at least partly by intermediate walls (67).

13. Cappuccino making apparatus according to one of the preceding claims, **characterized in that** the mobile cappuccino beverage maker is designed as a mobile service trolley (15) which has a receiving area (61) for the container receptacle (64), which receiving area can be closed by means of a cover (59), wherein a tap unit (57) which has the tap valves (70, 71, 73) is arranged on the outside of the trolley, wherein it is preferably provided that a plurality of service trolleys (15) form a set of service trolleys (15) which are fitted with identical and/or different functional units, and/or **in that** the service trolleys (15) are designed such that they can be detachably connected to one another and therefore can be moved together.

14. Cappuccino making apparatus according to one of the preceding claims, **characterized in that** the liquid containers which can be charged with a propellant and form coffee and/or milk containers (18, 42, 43) have an elongate and/or substantially cylindrical shape, wherein a riser pipe (51), which projects into the container and is at a defined distance, in particular a gap distance, from the base region and is indirectly or directly coupled to the respectively associated tap valve (70, 71, 73), is held on an upper container end face, with respect to the state in which the said containers are accommodated in the container receptacle (64), which is preferably formed by a removable, in particular screw-on, cover (50), wherein it is preferably provided that a connection valve (53), which is provided with a overpressure prevention means (52), in particular a rupture disc, for introducing the respective propellant into the liquid container is arranged on the liquid container, in particular on the upper container end face.

15. Method for preparing cappuccino by means of a cappuccino making apparatus according to one of Claims 1 to 14.

## Revendications

1. Dispositif de préparation de café à la mousse de lait,
avec un préparateur de boissons (15) au café et à la mousse de lait, qui est réalisé en version mobile et indépendante d'une alimentation d'énergie extérieure au préparateur,
le préparateur de boissons (15) au café et à la mousse de lait comportant un réceptacle de réservoirs (64) pour au moins un réservoir à café (18) et pour au moins un réservoir à lait (42) pour la mousse de lait, contenant du lait pour la préparation de mousse de lait, qui sont formés chacun par des réservoirs à liquides interchangeables et rechargeables,
le préparateur de boissons (15) au café et à la mousse de lait mobile comportant au moins une valve distributrice (70) de café, de préférence à action manuelle qui est associée à l'au moins un réservoir à café (18) et au moins une valve distributrice (73) de mousse de lait, de préférence à action manuelle, qui est associée au réservoir à lait (42) pour la mousse de lait, un agent propulseur, de préférence un agent moussant et propulseur, de manière la plus hautement préférée du protoxyde d'azote (N₂O)en tant qu'agent moussant et propulseur étant associé par ailleurs au réservoir à lait (73) pour la mousse de lait et lors d'un actionnement de la valve distributrice (73) de mousse de lait, de la mousse de lait s'échappant, notamment pour la préparation d'une boisson au café et à la mousse de lait,
**caractérisé en ce que**
le dispositif de préparation (1) de café à la mousse de lait comporte par ailleurs un poste central (2) indépendant du préparateur de boissons (15) au café et à la mousse de lait mobile, avec un préparateur de café (16) de poste central qui est accouplé à un dispositif de commande (17) au moyen duquel une quantité de boisson définie peut être produite pour remplir un réservoir à café (18) vide du préparateur de boissons (15) au café et à la mousse de lait mobile par commande programmée, de telle manière
- que sur le poste central (2) est introduite une quantité définie d'un café en poudre (21) dans un pot (23) muni de préférence d'un filtre à café (22), en tant qu'élément supplémentaire du préparateur de café (16) de poste central et
- que sur le poste central (2) est introduite dans le pot (23) rempli de café en poudre (21) moulu une quantité définie d'eau chaude à une température définie au moyen d'un dispositif d'arrosage (25) en tant qu'élément supplémentaire du préparateur de café (16) de poste central,
**en ce que** le pot (23) comporte une sortie de pot (30) par l'intermédiaire de laquelle l'extrait de café (29) peut être introduit indirectement ou directement dans le réservoir à café (18) vide du préparateur de boissons (15) au café et à la mousse de lait mobile, logé de manière amovible et interchangeable dans le poste central (2).

2. Dispositif de préparation de café à la mousse de lait selon la revendication 1, **caractérisé en ce qu'**au moyen du dispositif de commande (17), une quantité de café définie pour remplir un réservoir à café (18) vide du préparateur de boissons (15) au café et à la mousse de lait peut être produite par commande programmée, de telle manière
- que sur le poste central (2), une quantité toujours identique d'un café en poudre (21) est introduite dans un pot (23) muni de préférence d'un filtre à café (22), en tant qu'élément supplémentaire du préparateur de café (16) de poste central et
- **en ce que** sur le poste central (2), une quantité toujours identique d'eau chaude à une température toujours identique est introduite au goutte à goutte et/ou sous impulsion et/ou par à-coups dans le pot (23) rempli du café en poudre (21) moulu, au moyen d'un dispositif d'arrosage (25) en tant qu'élément supplémentaire du préparateur de café (16) de poste central.

3. Dispositif de préparation de café à la mousse de lait selon la revendication 1 ou la revendication 2, **caractérisé en ce que** le poste central comporte par ailleurs un poste de remplissage (37) d'agent propulseur, avec au moins un accumulateur d'agent propulseur, de préférence avec un accumulateur à air comprimé (38) pour le réservoir à café et/ou avec un accumulateur (39) d'agent moussant et propulseur pour le réservoir à lait (42) pour la mousse de lait, sur lequel poste de remplissage (37) d'agent propulseur l'au moins un réservoir à café (18) rempli de café peut être rempli d'un agent propulseur, de préférence d'air comprimé, de sorte que le préparateur de boissons (15) au café et à la mousse de lait mobile puisse être équipé d'un réservoir à café (18) hors duquel, lors d'un actionnement de la valve distributrice (70) de café, le café s'échappe sous une pression définie et/ou sur lequel l'au moins un réservoir à lait (42) pour la mousse de lait rempli de lait pour générer de la mousse de lait du préparateur de boissons (15) au café et à la mousse de lait peut être rempli d'un agent propulseur, de préférence de protoxyde d'azote (N₂O) en tant qu'agent moussant et propulseur.

4. Dispositif de préparation de café à la mousse de lait selon l'une quelconque des revendications précédentes, **caractérisé en ce que** le préparateur de café (16) de poste central et ainsi le poste central (2) comporte par ailleurs un moulin à café (20) pouvant être rempli de grains de café (19), au moyen duquel, par commande programmée via le dispositif de commande (17), une quantité définie, de préférence toujours identique de café en poudre (21) fraîchement moulu peut être produite directement au poste central (2), étant prévu de préférence qu'au moulin à café (20), il soit associé un dispositif de réception et/ou de pose (22) pour le pot (23), équipé de préférence d'un filtre (22).

5. Dispositif de préparation de café à la mousse de lait selon l'une quelconque des revendications précédentes, **caractérisé en ce que** le préparateur de café (16) de poste central comporte un dispositif de chauffage (31) vers lequel peut être amenée de l'eau et au moyen duquel et/ou dans lequel, par commande programmée via le dispositif de commande (17), l'eau peut être chauffée à la température souhaitée, étant prévu de préférence qu'au dispositif de chauffage (31), il soit associé ou qu'il soit intégré dans celui-ci un accumulateur (32) d'eau chaude, à partir duquel par commande programmée, via le dispositif de commande (17) à des heures prédéfinies, une quantité d'eau prédéfinie puisse être soutirée et amenée au dispositif d'arrosage (25), de préférence par à-coups ou par impulsions.

6. Dispositif de préparation de café à la mousse de lait selon l'une quelconque des revendications précédentes, **caractérisé en ce que** le pot comporte au moins un canal de dérivation (34) ouvert sur le dispositif d'arrosage (25), par l'intermédiaire duquel l'eau chaude amenée du dispositif d'arrosage (25) vers le pot (23) est dirigée en partie à l'avant du compartiment de réception du café en poudre, l'au moins un canal de dérivation (34) débouchant dans la sortie de pot (30), de sorte que là-bas, notamment pour éliminer des principes amers, il s'effectue un mélange d'eau de dérivation (35) et d'extrait de café brut (36) et ledit mélange est amené vers le réservoir à café (18), en tant qu'extrait de café (29).

7. Dispositif de préparation de café à la mousse de lait selon l'une quelconque des revendications précédentes, **caractérisé en ce que** le préparateur de café (16) de poste central comporte au moins un réceptacle à pot (24) dans lequel un pot (23) équipé de préférence d'un filtre (22) et chargé d'une quantité définie de café en poudre (21) moulu est insérable de manière amovible,
**en ce qu'**au-dessus dudit réceptacle à pot (24), le dispositif d'arrosage (25), de préférence un dispositif d'arrosage (25) comportant une sortie (26) sous la forme d'une pomme à douche par réceptacle à pot (24) est placé de telle sorte que la sortie (26) du dispositif d'arrosage (25) soit placée directement au-dessus de l'ouverture de réception (27) du pot (23) inséré dans le réceptacle à pot (24) et
**en ce qu'**en dessous du réceptacle à pot (24) est placé un dispositif de maintien (28) pour un réservoir à café (18) du préparateur de boissons (15) au café et à la mousse de lait mobile.

8. Dispositif de préparation de café à la mousse de lait selon l'une quelconque des revendications précédentes, **caractérisé en ce que** le poste central (2) comporte par ailleurs au moins un dispositif de chauffe (40) du lait, à l'aide duquel du lait, notamment du lait contenu dans des unités d'emballage usuelles du commerce ou des contenants (46) peut être chauffé à une température définie, notamment à une température de 30 °C à 100 °C, étant prévu de préférence qu'il soit associé au dispositif de chauffe (40) du lait, sur le poste central (2) un poste de remplissage (47) et/ou un poste de distribution sur lequel et/ou à l'aide duquel du lait chauffé peut être versé dans un réservoir à lait du préparateur de boissons (15) au café et à la mousse de lait.

9. Dispositif de préparation de café à la mousse de lait selon l'une quelconque des revendications précédentes, **caractérisé en ce que** le préparateur de boissons (15) au café et à la mousse de lait mobile comporte des réceptacles pour deux différents types de réservoirs à lait (42, 43) dont l'un des types en tant que réservoir à lait (42) pour de la mousse à lait est rempli de lait à une température prédéfinie, notamment de 30 °C à 50 ° C pour la préparation de la mousse de lait et l'autre type en tant que réservoir à lait (43) pour du lait chaud est rempli de lait plus chaud par rapport au premier type, notamment à une température de 75 °C à 90 °C, pour la préparation de lait chaud, au réservoir à lait (42) pour de la mousse de lait étant associée la valve distributrice (73) de mousse de lait et au réservoir à lait (43) pour du lait chaud étant associée une valve distributrice (71) de lait chaud et
**en ce que** le réservoir à lait (43) pour du lait chaud est rempli d'un agent propulseur, de préférence d'air comprimé d'un poste de remplissage (37) d'agent propulseur du poste central (2), de sorte que lors d'un actionnement de la valve distributrice (71) de lait chaud, du lait chaud liquide s'échappe sous une pression définie.

10. Dispositif de préparation de café à la mousse de lait selon l'une quelconque des revendications précédentes, **caractérisé en ce que** le poste central (2) est formé par un corps (3) en forme d'armoire qui est équipé des composants du poste central (2), étant prévu de préférence que le poste central (2) soit conçu en tant qu'une unité déplaçable et/ou transportable et/ou
que le poste central (2) comporte un dispositif de branchement électrique (4) pour un branchement électrique sur un réseau électrique et/ou que le poste central (2) comporte un dispositif de branchement sur l'eau (5) pour un branchement sur l'eau sur une alimentation d'eau potable.

11. Dispositif de préparation de café à la mousse de lait selon la revendication 10, **caractérisé en ce que** le poste central (2) formé par un corps (3) en forme d'armoire est divisé au centre et comporte deux parties de corps (7, 8) formant un compartiment réceptacle (9, 10) assemblées l'une à l'autre de manière rabattable ou pivotante au moyen d'un assemblage (6) articulé et/ou par charnière avec un axe (12) d'articulation et/ou de charnière vertical qui sont équipées chacune de composants du poste central (2), dans l'état rabattues l'une sur l'autre autour de l'axe (12) d'articulation ou de charnière vertical, les deux parties de corps (7, 8) formant un poste central (2), au moins fermé par endroits, transportable et/ou déplaçable, étant prévu de préférence que les deux parties de corps (7, 8) puissent être assemblées l'une avec l'autre de manière amovible au moyen d'un assemblage (13) à fermeture rapide et/ou comportent sur leur face inférieure des roues (14).

12. Dispositif de préparation de café à la mousse de lait selon l'une quelconque des revendications précédentes, **caractérisé en ce que** le réceptacle (64) à réservoirs du préparateur de boissons (15) au café et à la mousse de lait mobile est fabriqué en bloc en une matière isolante thermique dans laquelle sont conçus des compartiments de réception (65, 66) destinés à recevoir les réservoirs à liquides, étant prévu de préférence que les réservoirs à liquides individuels soient thermiquement isolés l'un de l'autre par des cloisons intermédiaires (67) ou soient placés séparément.

13. Dispositif de préparation de café à la mousse de lait selon l'une quelconque des revendications précédentes, **caractérisé en ce que** le préparateur de boissons (15) au café et à la mousse de lait mobile est conçu en tant que chariot de service roulant, qui comporte un compartiment de réception (61) du réceptacle à réservoirs (64) pouvant être fermé de préférence à l'aide d'un couvercle (59), une unité distributrice (57) comportant les valves distributrices (70, 71, 73) étant placée à l'extérieur du chariot, étant prévu de préférence que plusieurs chariots de service (15) forment un ensemble de chariots de service (15) équipés d'unités fonctionnelles identiques et/ou différentes et/ou que les chariots de service (15) sont conçus de sorte à pouvoir être assemblés les uns aux autres de manière amovible et ainsi déplacés en commun.

14. Dispositif de préparation de café à la mousse de lait selon l'une quelconque des revendications précédentes, **caractérisé en ce que** les réservoirs à liquides pouvant être chargés d'un agent propulseur et formant les réservoirs (18, 42, 43) à café et/ou à lait présentent une forme allongée et/ou sensiblement cylindrique, sur une face frontale supérieure de réservoir, dans l'état réceptionné dans le réceptacle à réservoirs (64), qui est formée de préférence par un couvercle (50) amovible, notamment à visser, étant maintenu un conduit montant (51) saillant dans le réservoir qui présente un écart défini, notamment un écart en fente par rapport à la région du fond, qui est accouplé indirectement ou directement à la valve distributrice (70, 71, 73) respectivement associée, étant prévu de préférence que sur le réservoir à liquide, notamment sur la face frontale du réservoir à liquide, il soit placé une valve de raccordement (53) munie d'une sécurité contre la surpression (52), notamment d'un disque claquant pour l'introduction de l'agent propulseur concerné dans le réservoir à liquide.

15. Procédé destiné à préparer du café à la mousse de lait à l'aide d'un dispositif de préparation de café à la mousse de lait selon l'une quelconque des revendications 1 à 14.
